# EUROPEAN PATENT APPLICATION

(11) **EP 4 787 885 A1**
(43) Date of publication of application: **05.08.2026**
(21) Application number: 24871623.5
(22) Date of filing: 23.08.2024
(51) Int. Cl.: H04N 25/70, H04N 23/54, H04N 23/60, H04N 25/58, H04N 25/773

(54) **LIGHT DETECTION DEVICE AND LIGHT DETECTION SYSTEM**

(30) Priority: 25.09.2023 JP 2023161491
(71) Applicant: Sony Semiconductor Solutions Corporation, Atsugi-shi, Kanagawa 243-0014 (JP)
(72) Inventor: ARAKI Yugo, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/029969
(87) International publication number: WO 2025/069821

(57) **Abstract**

[Object] To enable enhancement of spatiotemporal resolution and enable generation of high-quality images.

[Solving Means] A light detecting apparatus includes a plurality of two-dimensionally arrayed pixels, and a signal processing section that generates an image on the basis of a pixel signal output from each of the plurality of pixels. Each of the plurality of pixels has a photoelectric converting element that detects an incident photon, and a pixel circuit that generates the pixel signal on the basis of whether the photoelectric converting element has detected a photon in each one of a plurality of detection periods arranged sequentially in a time-axis direction. Each of the plurality of detection periods has an encoded time width.

## Description

### Technical Field

The present disclosure relates to a light detecting apparatus and a light detection system.

### Background Art

There is a known light detecting apparatus that uses a SPAD (Single Photon Avalanche Diode) that amplifies electrons like an avalanche from one incident photon (photon). SPADs are capable of detecting even weak light and are capable of detecting light at high speeds compared with conventional CMOSs (Complementary Metal-Oxide-Semiconductors) and the like. As an application example of a light detecting apparatus using a SPAD, for example, there is a technology having been proposed in which the lengths of photon detection periods are adjusted in accordance with the illuminance to expand the dynamic range (see Patent Literature 1).

### Citation List

### Patent Literature

Patent Literature 1: Japanese Patent Application Laid-open No. 2023-059522A

### Disclosure of Invention

### Technical Problem

However, there is a problem with Patent Literature 1 that lengthening photon detection periods undesirably leads to a reduction in temporal resolution. In addition, regarding dynamic subjects, artifacts corresponding to the detection period pattern occur, undesirably leading to deterioration of the image data.

In view of this, the present disclosure provides a light detecting apparatus and a light detection system that are capable of enhancing spatiotemporal resolution and capable of generating high-quality images.

### Solution to Problem

In order to solve the problem described above, the present disclosure provides a light detecting apparatus including
a plurality of two-dimensionally arrayed pixels; and
a signal processing section that generates an image on the basis of a pixel signal output from each of the plurality of pixels, in which
each of the plurality of pixels has
   a photoelectric converting element that detects an incident photon, and
   a pixel circuit that generates the pixel signal on the basis of whether the photoelectric converting element has detected a photon in each one of a plurality of detection periods arranged sequentially in a time-axis direction, and
each of the plurality of detection periods has an encoded time width.

The light detecting apparatus may further include an optimizing section that optimizes the time width of each of the plurality of detection periods.

The optimizing section may optimize the time width of each of the plurality of detection periods such that information loss of the pixel signal is minimized.

The optimizing section may randomly set the time width of each of the plurality of detection periods.

Detection periods of the plurality of detection periods may be arranged without gaps in the time-axis direction.

At least some pairs of detection periods included in the plurality of detection periods and adjacent to each other in the time-axis direction may be provided such that the detection periods of each of the at least some pairs are spaced from each other in the time-axis direction.

The pixel circuit may generate the pixel signal including a number of detection periods included in the plurality of detection periods and in which a photon has been incident.

The signal processing section may include
a compression image generating section that generates a compression image that has been compressed spatially and temporally on the basis of a plurality of the pixel signals output from the plurality of pixels, and
a reconstruction image generating section that generates, on the basis of the compression image, a reconstruction image with enhanced spatiotemporal resolution, compared to the compression image.

The light detecting apparatus may further include
an information storage section that stores therein first information for setting the time width of each of the plurality of detection periods; and
an information setting section that sets second information necessary for generating the reconstruction image, in which
the compression image generating section may generate the compression image of one frame on the basis of a plurality of the pixel signals of a plurality of frames generated during the plurality of detection periods set on the basis of the first information, and
the reconstruction image generating section may generate the reconstruction image from the compression images of a plurality of frames on the basis of the second information.

The information storage section may store therein the first information determined in advance, and the information setting section may set the second information determined in advance.

The light detecting apparatus may further include
a scene detecting section that detects a feature of the compression image; and
an information determining section that determines the first information and the second information on the basis of the feature of the compression image detected by the scene detecting section.

The information determining section may determine the first information and the second information on the basis of a feature including at least one of a type of subject included in the compression image, or illuminance.

The photoelectric converting element may have a SPAD (Single Photon Avalanche Diode).

The photoelectric converting element may be provided for each jot of a QIS (Quanta Image Sensor).

In addition, the present disclosure provides a light detection system including
a light detecting apparatus that generates a plurality of pixel signals by photoelectric conversion; and
a signal processing apparatus that generates an image on the basis of the plurality of pixel signals, in which
the light detecting apparatus has a plurality of two-dimensionally arrayed pixels generating the plurality of pixel signals,
each of the plurality of pixels has
   a photoelectric converting element that detects an incident photon, and
   a pixel circuit that generates the pixel signal on the basis of whether the photoelectric converting element has detected a photon in each one of a plurality of detection periods arranged sequentially in a time-axis direction, and
each of the plurality of detection periods has an encoded time width.

The light detecting apparatus may have a compression image generating section that generates, on the basis of the plurality of pixel signals, a compression image that has been compressed spatially and temporally, and
the signal processing apparatus may have a reconstruction image generating section that generates, on the basis of the compression image, a reconstruction image with enhanced spatiotemporal resolution, compared to the compression image.

The signal processing apparatus may have
an information storage section that stores therein first information for setting the time width of each of the plurality of detection periods,
an information setting section that sets second information necessary for generating the reconstruction image,
a scene detecting section that detects a feature of the compression image, and
an information determining section that determines the first information and the second information on the basis of the feature of the compression image detected by the scene detecting section.

The light detecting apparatus may have
an information storage section that stores therein first information for setting the time width of each of the plurality of detection periods,
an information setting section that sets second information necessary for generating the reconstruction image,
a scene detecting section that detects a feature of the compression image, and
an information determining section that determines the first information and the second information on the basis of the feature of the compression image detected by the scene detecting section.

The signal processing apparatus may have a signal processing section that performs predetermined signal processing on the basis of the reconstruction image.

The light detecting apparatus and the signal processing apparatus may include mutually different semiconductor chips.

### Brief Description of Drawings

[Fig. 1] Fig. 1 is a block diagram illustrating the configuration of a light detecting apparatus according to a first embodiment of the present disclosure.
[Fig. 2A] Fig. 2A illustrates a first example of the stacked layer structure of the light detecting apparatus.
[Fig. 2B] Fig. 2B illustrates a second example of the stacked layer structure of the light detecting apparatus.
[Fig. 3] Fig. 3 is a block diagram illustrating the configuration of a pixel according to the first embodiment of the present disclosure.
[Fig. 4] Fig. 4 is a circuit diagram illustrating the configuration of a light receiving section according to the first embodiment of the present disclosure.
[Fig. 5] Fig. 5 is a cross-sectional view of a photoelectric converting element according to the first embodiment of the present disclosure.
[Fig. 6A] Fig. 6A is a timing chart of each signal of a pixel according to the first embodiment of the present disclosure.
[Fig. 6B] Fig. 6B illustrates detection of photons during a measurement period of a pixel according to the first embodiment of the present disclosure.
[Fig. 7A] Fig. 7A illustrates the characteristics of long detection periods and short detection periods in a low-illuminance image-capturing scene.
[Fig. 7B] Fig. 7B illustrates the characteristics of long detection periods and short detection periods in a high-illuminance image-capturing scene.
[Fig. 8] Fig. 8 illustrates a measurement period combining long detection periods and short detection periods.
[Fig. 9] Fig. 9 is a graph illustrating the relationship between illuminance and the number of detected photons during each detection period.
[Fig. 10A] Fig. 10A illustrates a periodic measurement period.
[Fig. 10B] Fig. 10B illustrates an artifact generated during the measurement period in Fig. 10A.
[Fig. 10C] Fig. 10C is an enlarged view of the artifact in Fig. 10B.
[Fig. 11] Fig. 11 is a flowchart of image generation performed by the light detecting apparatus according to the first embodiment of the present disclosure.
[Fig. 12A] Fig. 12A illustrates a first configuration example of a measurement period according to the first embodiment of the present disclosure.
[Fig. 12B] Fig. 12B illustrates a second configuration example of a measurement period according to the first embodiment of the present disclosure.
[Fig. 13A] Fig. 13A illustrates a subject.
[Fig. 13B] Fig. 13B illustrates a spatiotemporally-compressed compression image according to the first embodiment of the present disclosure.
[Fig. 13C] Fig. 13C illustrates a reconstruction image according to the first embodiment of the present disclosure.
[Fig. 14A] Fig. 14A is a diagram for explaining machine learning of a plurality of detection periods according to the first embodiment of the present disclosure.
[Fig. 14B] Fig. 14B is a diagram for explaining machine learning of reconstruction parameters according to the first embodiment of the present disclosure.
[Fig. 14C] Fig. 14C is a block diagram illustrating the configuration of a machine learning section according to the first embodiment of the present disclosure.
[Fig. 15] Fig. 15 is a block diagram illustrating a light detection system according to the first embodiment of the present disclosure.
[Fig. 16A] Fig. 16A illustrates an image-capturing operation performed by a light detecting apparatus according to a first comparative example.
[Fig. 16B] Fig. 16B illustrates a compression image and a reconstruction image according to the first comparative example.
[Fig. 17A] Fig. 17A illustrates an image-capturing operation performed by a light detecting apparatus according to a second comparative example.
[Fig. 17B] Fig. 17B schematically illustrates a measurement period of the light detecting apparatus according to the second comparative example.
[Fig. 18A] Fig. 18A is a block diagram illustrating a first configuration example of a light detection system according to a second embodiment of the present disclosure.
[Fig. 18B] Fig. 18B is a block diagram illustrating a second configuration example of the light detection system according to the second embodiment of the present disclosure.
[Fig. 19A] Fig. 19A is a diagram for explaining machine learning of detection periods according to the second embodiment of the present disclosure.
[Fig. 19B] Fig. 19B is a diagram for explaining machine learning of reconstruction parameters according to the second embodiment of the present disclosure.
[Fig. 20] Fig. 20 is a block diagram illustrating the configuration of a pixel array section according to a third embodiment of the present disclosure.
[Fig. 21] Fig. 21 is a diagram for explaining an operation performed by a jot according to the third embodiment of the present disclosure.
[Fig. 22] Fig. 22 is a block diagram depicting an example of schematic configuration of a vehicle control system.
[Fig. 23] Fig. 23 is a diagram of assistance in explaining an example of installation positions of an outside-vehicle information detecting section and an imaging section.

### Mode(s) for Carrying Out the Invention

Hereinbelow, embodiments of a light detecting apparatus and a light detection system are explained with reference to the drawings. Although the following explanation focuses on the main constituent portions of the light detecting apparatus and the light detection system, the light detecting apparatus and the light detection system can have unillustrated or unexplained constituent portions or functions. The following explanation does not preclude the unillustrated or unexplained constituent portions or functions.

### (First Embodiment)

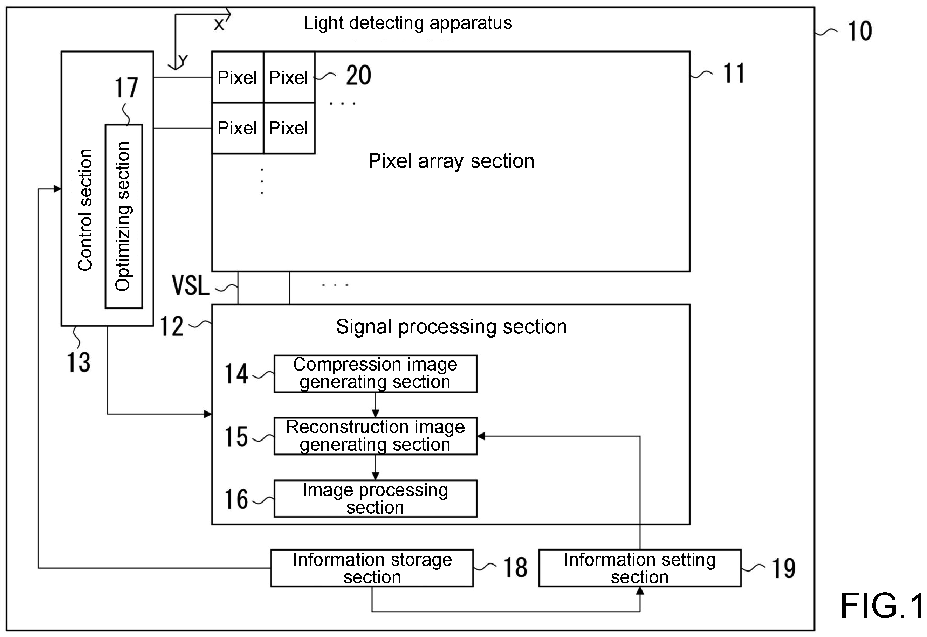

Fig. 1 is a block diagram illustrating the configuration of a light detecting apparatus 10 according to a first embodiment of the present disclosure. The light detecting apparatus 10 detects incident light and outputs an image based on the incident light. For example, the light detecting apparatus 10 is mounted on a smartphone, a digital camera, a personal computer, an in-vehicle camera, an IoT (Internet of Things) camera, or the like. The light detecting apparatus 10 includes a pixel array section 11, a signal processing section 12, and a control section 13. As mentioned later, some of the constituent portions of the light detecting apparatus 10 illustrated in Fig. 1 may be provided to an apparatus (e.g. a signal processing apparatus mentioned later, etc.) different from the light detecting apparatus 10.

The pixel array section 11 has a plurality of pixels 20 arrayed in a first direction X and a second direction Y. In the present specification, the left-right (horizontal) direction in Fig. 1 is called a first direction X, and the up-down (vertical) direction in Fig. 1 is called a second direction Y. In addition, in the present specification, one row of pixels 20 that are arrayed in the first direction X is called a pixel row. One column of pixels 20 that are arrayed in the second direction Y is called a pixel column.

Each pixel 20 has a photoelectric converting element that detects incident photons and generates a pixel signal on the basis of photons detected during a predetermined measurement period. For example, the pixel signal includes gradation information according to the light amount of incident light. Alternatively, the pixel signal may include event information representing changes in the light amount of incident light. A pixel 20 that outputs a pixel signal including gradation information is called a gradation pixel, and a pixel 20 that outputs a pixel signal including event information is called an EVS (Event-based Vision Sensor) pixel. The pixel array section 11 may include a plurality of gradation pixels or may include a plurality of EVS pixels. In addition, the pixel array section 11 may include a mixture of gradation pixels and EVS pixels. Note that, in the present specification, an example in which the pixel array section 11 includes a plurality of gradation pixels is explained.

Each pixel column in the plurality of pixels 20 is connected to a vertical signal line VSL. Each vertical signal line VSL inputs, to the signal processing section 12, pixel signals output from all pixels 20 in the corresponding pixel column.

The signal processing section 12 generates an image on the basis of a plurality of pixel signals output from each of the plurality of pixels 20. The signal processing section 12 has a compression image generating section 14, a reconstruction image generating section 15, and an image processing section 16.

On the basis of a plurality of pixel signals, the compression image generating section 14 generates a compression image that has been compressed spatially and temporally. The generated compression image is an image that includes blur (hereinbelow, called blur) and moreover is an image that includes non-uniform blur. In addition, the compression image generating section 14 is capable of generating a compression image of one frame on the basis of pixel signals of a plurality of frames.

On the basis of a plurality of compression images (blurred images) repeatedly generated by the compression image generating section 14, the reconstruction image generating section 15 generates a reconstruction image with enhanced spatiotemporal resolution, compared to the compression images. The reconstruction image generating section 15 is capable of reconstructing images of a plurality of frames from a compression image of one frame generated on the basis of pixel signals of the original plurality of frames.

For example, processes performed by the image processing section 16 can be executed by an ISP (Image Signal Processor). The image processing section 16 performs predetermined image processing (e.g. demosaicing, distortion correction, etc.) on a reconstruction image generated by the reconstruction image generating section 15. The image processing section 16 outputs the image-processed image to a downstream application apparatus or the like. As mentioned above, the reconstruction image generating section 15 and the image processing section 16 may be provided to an apparatus (e.g. the signal processing apparatus mentioned later, etc.) different from the light detecting apparatus 10.

For example, in synchronization with vertical synchronizing signals, the control section 13 sequentially selects pixel rows and drives the pixels 20, row by row. In this case, the pixels 20 of the plurality of pixels 20 output pixel signals in synchronization, row by row. Note that the pixels 20 of the plurality of pixels 20 may be configured to output pixel signals asynchronously each at its own timing. The control section 13 includes a shift register, an arbiter, or the like.

The control section 13 has an optimizing section 17. The optimizing section 17 adjusts photon detection periods such that information loss of pixel signals is minimized when reconstruction from a compression image is performed at the reconstruction image generating section 15 (or a downstream application processor, etc.). The detailed operation performed by the optimizing section 17 is mentioned later.

The light detecting apparatus 10 may have an information storage section 18 that stores therein information (first information) for allowing the optimizing section 17 to drive the pixels 20 optimally, and an information setting section 19 that sets information (second information) necessary for generating a reconstruction image. The information storage section 18 may be disposed in the control section 13. The second information is also called reconstruction parameters.

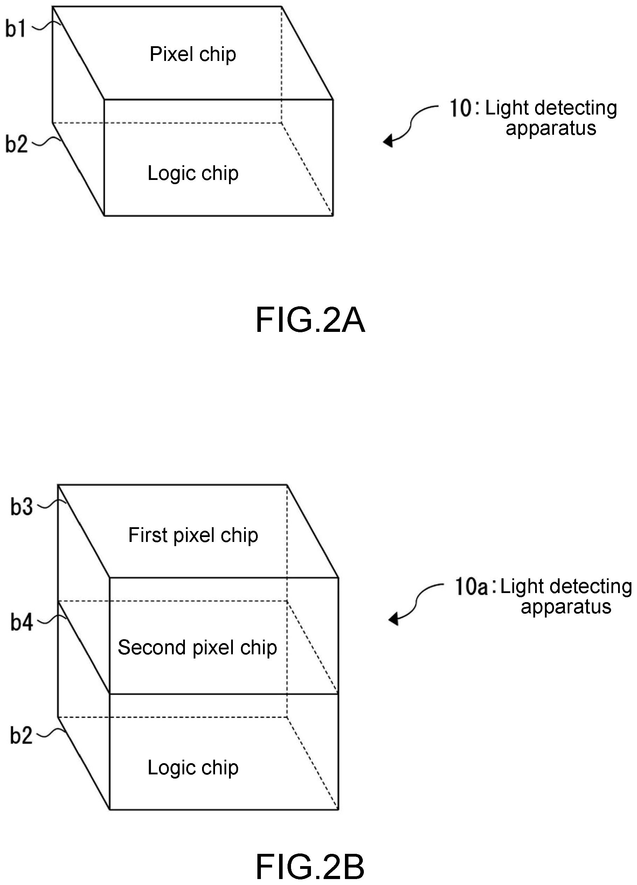

For example, the light detecting apparatus 10 can include a stacked chip formed by stacking a plurality of chips. Fig. 2A illustrates a first example of the stacked layer structure of the light detecting apparatus 10. The light detecting apparatus 10 in Fig. 2A has a two-layer structure including a pixel chip b1 and a logic chip b2 that are pasted together in this order. These chips are joined by vias or the like. Note that the pixel chip b1 and the logic chip b2 may be joined not by vias, but by Cu-Cu bonding or bumps.

For example, the plurality of pixels 20 in the pixel array section 11 is disposed in the pixel chip b1. For example, the signal processing section 12 and the control section 13 are disposed in the logic chip b2.

Fig. 2B illustrates a second example of the stacked layer structure of the light detecting apparatus 10. The light detecting apparatus 10 in Fig. 2B has a three-layer structure including a first pixel chip b3, a second pixel chip b4, and the logic chip b2 that are pasted together in this order. Some constituent elements (e.g. photoelectric converting elements and their peripheral circuits) of the pixels 20 are disposed in the first pixel chip b3. The remaining constituent elements of the pixels 20 are disposed in the second pixel chip b4. By disposing some of the constituent elements of the pixels 20 in the second pixel chip b2, the light detecting apparatus 10 can have a greater area size ratio of the photoelectric converting elements to the chip area size, also enabling sensitivity enhancement and enabling chip miniaturization.

Note that constituent elements disposed in each chip are not limited to the constituent elements mentioned above. In addition, the light detecting apparatus 10 may include four or more levels of stacked chips or may include one flat chip.

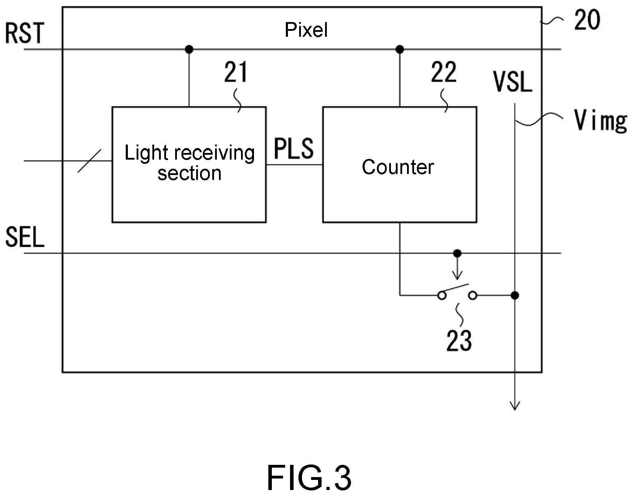

Fig. 3 is a block diagram illustrating the configuration of a pixel 20 according to the first embodiment of the present disclosure. The pixel 20 includes a light receiving section 21, a counter 22, and a selection switch 23.

The light receiving section 21 generates a pulse signal PLS in response to the incidence of photons and supplies the pulse signal PLS to the counter 22. The counter 22 measures the number of pulses in the pulse signal PLS. The measurement value of the counter 22 is initialized by a reset signal RSTc. On the basis of a selection signal SEL, the selection switch 23 switches whether to output a pixel signal Vimg based on the measurement value of the counter 22. For example, the selection signal SEL and the reset signal RSTc are supplied from the control section 13.

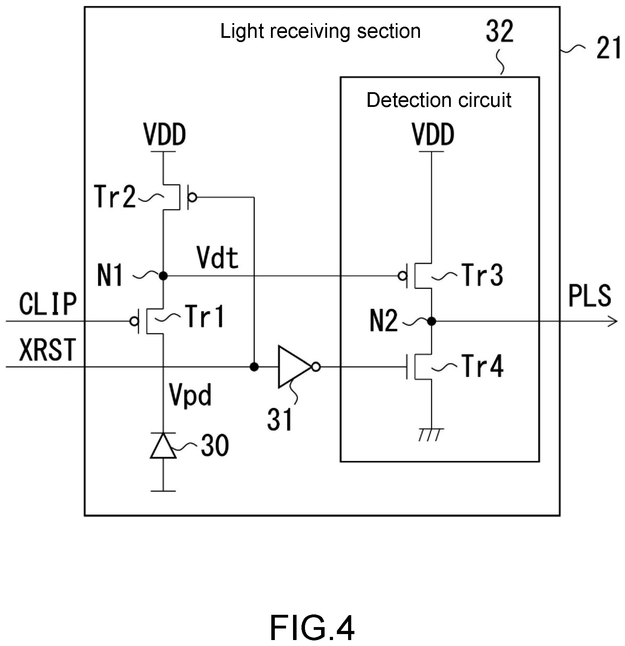

Fig. 4 is a circuit diagram illustrating the configuration of the light receiving section 21 according to the first embodiment of the present disclosure. The light receiving section 21 has a photoelectric converting element 30, an inverter 31, a clip transistor Tr1, a recharge transistor Tr2, and detection transistors Tr3 and Tr4. In the example in Fig. 4, the transistor Tr1 and the transistors Tr2 and Tr3 include NMOS (N channel Metal-Oxide-Semiconductor) transistors. In addition, the transistor Tr4 includes a PMOS (P channel Metal-Oxide-Semiconductor) transistor. Note that the conductivity types of the transistors Tr1 to Tr4 can be varied as desired. Any one or all of the transistors Tr1 to Tr3 may include NMOS transistors, and the transistor Tr4 may include a PMOS transistor.

For example, the photoelectric converting element 30 is a SPAD. The photoelectric converting element 30 detects photons that are incident on the pixel 20 and generates electric charge. Either one of the anode or cathode (the cathode in the example in Fig. 4) of the photoelectric converting element 30 is connected to the drain of the transistor Tr1. The other one of the anode or cathode (the anode in the example in Fig. 4) of the photoelectric converting element 30 is connected to a node with a voltage level lower than a power supply voltage node VDD.

The clip transistor Tr1 switches whether to connect the photoelectric converting element 30 and a detection node N1. The detection node N1 is a node connected to a detection circuit 32 mentioned later. The source of the clip transistor Tr1 is connected to the detection node N1. A clip signal CLIP is input to the gate of the clip transistor Tr1. For example, the clip transistor Tr1 is turned on when the low-level clip signal CLIP is input.

The recharge transistor Tr2 switches whether to charge the photoelectric converting element 30. The drain of the recharge transistor Tr2 is connected to the detection node N1. The source of the recharge transistor Tr2 is connected to the power supply voltage node VDD. A control signal XRST is input to the gate of the recharge transistor Tr2. For example, the recharge transistor Tr2 is turned on when the low-level control signal XRST is input.

The detection transistors Tr3 and Tr4 are included in the detection circuit 32. The detection circuit 32 outputs the pulse signal PLS on the basis of whether the photoelectric converting element 30 has detected a photon.

The drain of the detection transistor Tr3 is connected to an output node N2. The source of the detection transistor Tr3 is connected to the power supply voltage node VDD. A detection signal Vdt is input from the detection node N1 to the detection transistor Tr3. The detection transistor Tr3 transitions to the ON state when the voltage level of the detection signal Vdt has become equal to or lower than a predetermined threshold.

The source of the detection transistor Tr4 is connected to a ground voltage node. The drain of the detection transistor Tr4 is connected to the output node N2. An inverted signal of the control signal XRST is input to the gate of the detection transistor Tr4 via the inverter 31. For example, the detection transistor Tr4 transitions to the OFF state when an inverted signal of the high-level control signal XRST is input.

Although the detection circuit 32 has an inverter that inverts the voltage of the output node N2 or the like in some cases, the illustration of such an inverter or the like is omitted from Fig. 4.

For example, the clip signal CLIP and the control signal XRST are input from the control section 13. In the example illustrated in Fig. 4, the two transistors Tr2 and Tr4 are controlled by the control signal XRST. Note that the detection transistor Tr4 may be controlled independently by a signal different from the control signal XRST.

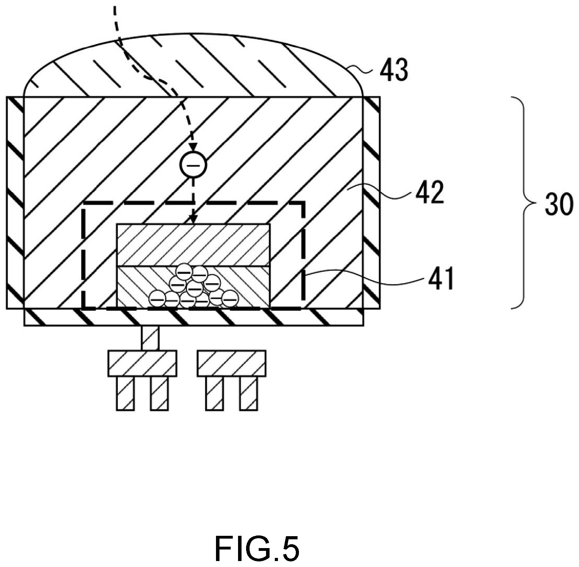

Fig. 5 is a cross-sectional view of the photoelectric converting element 30 according to the first embodiment of the present disclosure. The photoelectric converting element 30 has a light absorption section 41 and an electric charge multiplying section 42. An on-chip lens 43 that condenses incident light is disposed on the light incidence surface (the top side in Fig. 5) of the photoelectric converting element 30. Although a color filter that transmits only a particular wavelength component of incident light or the like is disposed between the photoelectric converting element 30 and the on-chip lens 43 in some cases, the illustration of such a color filter or the like is omitted from Fig. 5.

The light absorption section 41 absorbs photons that are incident through the on-chip lens 43 and generates electric charge (e.g. electrons e). Upon taking in the electrons e generated by the light absorption section 41, the electric charge multiplying section 42 accelerates the electrons e by a high electrical field, causes the electrons e to collide with semiconductor atoms, and generates new electrons e by ionization. In the electric charge multiplying section 42, a so-called avalanche multiplication occurs in which the generated electrons e further collide with other semiconductor atoms and a large current is generated through a chain reaction of impact ionization. The photoelectric converting element 30 is capable of detecting light in the units of single photons by multiplying one electron through avalanche multiplication.

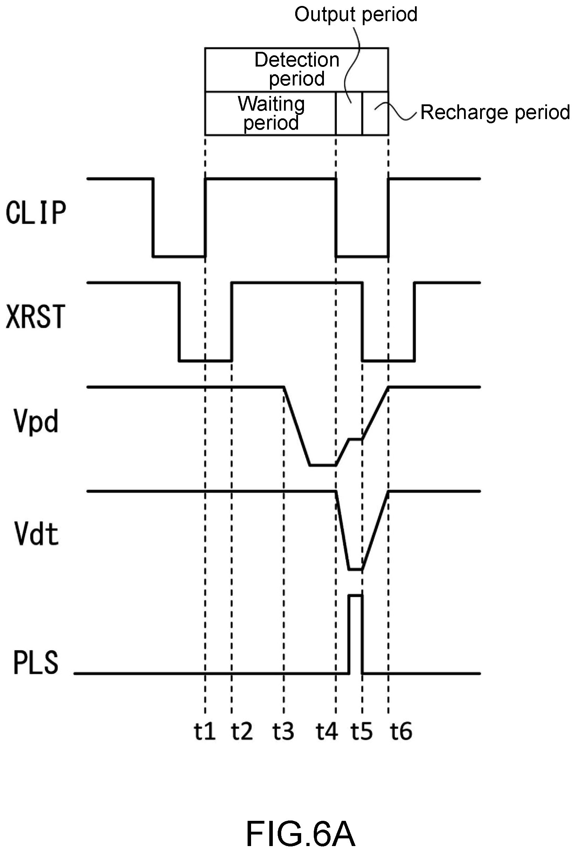

Fig. 6A is a timing chart of each signal of a pixel 20 according to the first embodiment of the present disclosure. Fig. 6A illustrates the clip signal CLIP, the control signal XRST, a cathode voltage Vpd of the photoelectric converting element 30, the detection signal Vdt, and the pulse signal PLS.

First, at time t1, the clip signal CLIP transitions to the high level. Thereby, the clip transistor Tr1 is turned off, and the photoelectric converting element 30 and the detection node N1 become electrically disconnected. Thereby, the photoelectric converting element 30 waits for the incidence of a photon.

At time t2, the control signal XRST transitions to the high level. Thereby, the recharge transistor Tr2 is turned off, and the detection node N1 becomes disconnected from the power supply voltage node VDD. In addition, the detection transistor Tr4 is turned off, and the detection circuit 32 transitions to a drive state.

When the photoelectric converting element 30 detects a photon, and a large current is generated through avalanche multiplication at time t3, the cathode voltage Vpd lowers significantly.

At time t4, the clip signal CLIP transitions to the low level. Since the clip transistor Tr1 is turned on, the electric charge of the photoelectric converting element 30 is transferred to the detection node N1, and the signal level of the detection signal Vdt lowers. Thereby, the detection transistor Tr3 is turned on, and the high-level pulse signal PLS is output from the detection circuit 32.

At time t5, the control signal XRST transitions to the low level. Thereby, the recharge transistor Tr2 is turned on, the voltage level of the detection node N1 is reset, and the photoelectric converting element 30 is recharged. In addition, the detection transistor Tr4 is turned on, the driving of the detection circuit 32 is stopped, and the pulse signal PLS transitions to the low level.

At time t6, the recharging of the photoelectric converting element 30 is completed, and the cathode voltage Vpd rises to the level prior to the detection of the photon. In addition, since the voltage level of the detection node N1 is reset, the signal level of the detection signal Vdt rises, and the detection transistor Tr3 is turned off. As a result, the clip signal CLIP transitions to the high level, and the photoelectric converting element 30 waits for the incidence of a photon again.

As described above, the period during which the clip signal CLIP is at the high level (time t1 to time t4) is a waiting period during which the photoelectric converting element 30 waits for the incidence of a photon. In addition, the period during which the clip signal CLIP is at the low level includes an output period during which the high-level pulse signal PLS is output (time t4 to time t5) and a recharge period (time t5 to time t6) that continues until the photoelectric converting element 30 is recharged.

During a waiting period, the photoelectric converting element 30 is capable of detecting one photon. After detecting a photon during the waiting period, the photoelectric converting element 30 is not capable of detecting a new photon until being recharged.

In a case where the photoelectric converting element 30 has detected a photon during the waiting period, the high-level pulse signal PLS is output during an output period. In a case where the photoelectric converting element 30 has not detected a photon during the waiting period, the high-level pulse signal PLS is not output during the output period.

By being recharged during a recharge period, the photoelectric converting element 30 is capable of newly detecting a photon during the next waiting period.

In the present specification, a waiting period, an output period, and a recharge period, in combination, are called a detection period. Whereas one photon is detected during each detection period in the example illustrated in Fig. 6A, each pixel 20 may detect two or more photons during each detection period.

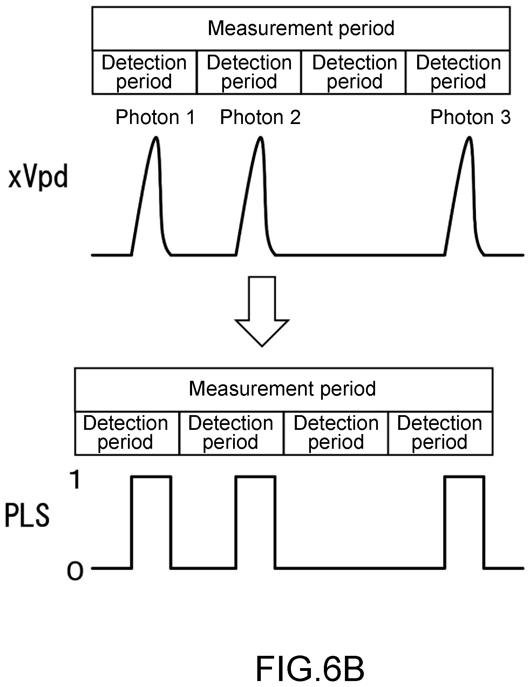

Fig. 6B illustrates detection of photons during a measurement period of a pixel 20. In the present specification, for example, a period during which the number of photons of one frame is counted is called a measurement period. As illustrated in Fig. 6B, each measurement period includes a plurality of detection periods. That is, the photoelectric converting element 30 is capable of detecting a plurality of photons during the measurement period. Fig. 6B illustrates an inverted voltage xVpd of the cathode voltage. The inverted voltage xVpd of the cathode voltage represents whether a photon has been detected during each detection period.

In addition, Fig. 6B illustrates the pulse signal PLS based on whether a photon has been detected during each detection period. The light receiving section 21 in Fig. 3 outputs the one pulse signal PLS upon detecting a photon during each detection period. The light receiving section 21 does not output a plurality of the pulse signals PLS during a single detection period. In addition, the light receiving section 21 does not output the pulse signal PLS unless a photon is detected during each detection period.

As illustrated in Fig. 6B, the pulse signal PLS is output as a digital signal having one-bit information representing whether a photon has been detected during each detection period. For example, the pulse signal PLS outputs 1 in a case where a photon is detected and outputs 0 in a case where a photon is not detected.

The counter 22 increments its count each time the pulse signal PLS is output. By measuring the number of times the pulse signal PLS is output, the counter 22 is capable of measuring the number of detection periods in a measurement period during which a photon has been detected. For example, the pixel 20 is capable of measuring the luminance of a subject on the basis of the number of photons measured during a predetermined measurement period.

As described above, the detection circuit 32 and the counter 22 generate the pixel signal Vimg in accordance with the number of detection periods in the measurement period during which a photon has been detected. That is, the pixel signal Vimg is generated on the basis of whether the photoelectric converting element 30 has detected a photon in each one of a plurality of detection periods arranged sequentially in the time-axis direction. In the present specification, the detection circuit 32 and the counter 22, in combination, are called a pixel circuit. The pixel signal Vimg includes information about the number of detection periods in the measurement period during which a photon has been detected. That is, the pixel circuit generates the pixel signal Vimg including the number of detection periods during which a photon has been incident.

In the measurement period in Fig. 6B, detection periods corresponding to exposure periods are arranged without gaps in the time-axis direction. Note that a non-exposure period may be provided between each pair of detection periods. For example, the non-exposure period can be provided by shutter control or the like.

The pixel 20 is capable of varying the lengths of detection periods by varying the lengths of periods during which the CLIP signal is at the high level. Hereinbelow, relatively long detection periods are called long detection periods, and relatively short detection periods are called short detection periods.

Since the number of photons that are incident on the photoelectric converting element 30 is enormous, the number of incident photons is estimated by counting some of the incident photons. This estimation scheme is also called the CLK-DET (Clocked Detector) scheme. The light detecting apparatus 10 can prevent overflow or the like of the measurement value of the counter 22 by the CLK-DET scheme.

In the CLK-DET scheme, photon count loss is generated intentionally. One technique of generating photon count loss uses long detection periods, which are lengthened photon detection periods. In the long detection periods, count loss can be generated by not detecting photons other than one photon that has been detected first. Another technique of generating photon count loss thins photons using short detection periods, which are shortened photon detection periods.

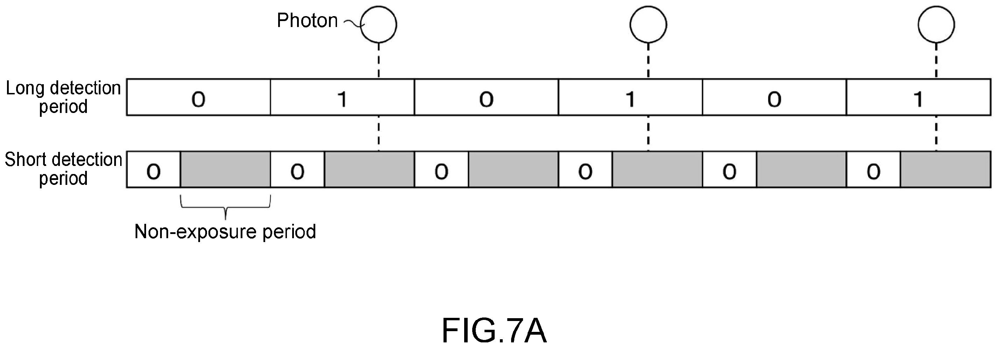

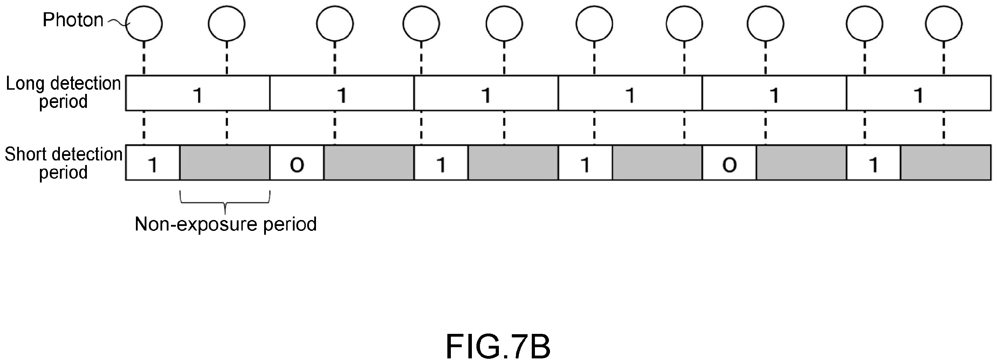

Fig. 7A illustrates the characteristics of long detection periods and short detection periods in a low-illuminance image-capturing scene. Fig. 7B illustrates the characteristics of long detection periods and short detection periods in a high-illuminance image-capturing scene. Note that Fig. 7A and Fig. 7B illustrate examples in which a non-exposure period is provided between each pair of short detection periods to thin photons.

As illustrated in Fig. 7A, in a low-illuminance image-capturing scene where the number of incident photons is small, many photons are incident during non-exposure periods, and the incidence of photons often cannot be detected during short detection periods. Accordingly, in a low-illuminance image-capturing scene, it is desirable to use long detection periods during which photon detection loss is less likely to occur.

As illustrated in Fig. 7B, in a high-illuminance image-capturing scene where the number of incident photons is large, photons are detected during almost all detection periods in long detection periods, and there is a possibility that periods during which photons are not incident cannot be detected accurately. Accordingly, in a high-illuminance image-capturing scene, it is desirable to use short detection periods during which photons can be thinned and detected.

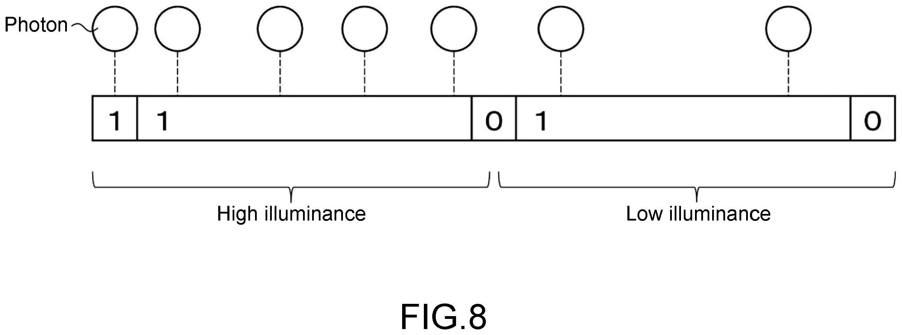

In addition, the light detecting apparatus 10 may combine long detection periods and short detection periods. Fig. 8 illustrates a measurement period combining long detection periods and short detection periods. During the measurement period in Fig. 8, photons can be thinned and detected using short detection periods in a high-illuminance image-capturing scene. In addition, during the measurement period in Fig. 8, photon detection loss can be prevented using long detection periods in a low-illuminance image-capturing scene.

Fig. 8 illustrates an example in which long detection periods and short detection periods are arranged alternately. This is not the sole example. A measurement period of the CLK-DET scheme may include a period with two or more consecutive long detection periods (or short detection periods), may include randomly-arranged long detection periods and short detection periods, or may include three or more detection periods. As mentioned later, the light detecting apparatus 10 according to the first embodiment of the present disclosure further optimizes the sequence of a plurality of detection periods with different time widths in a measurement period of the CLK-DET scheme.

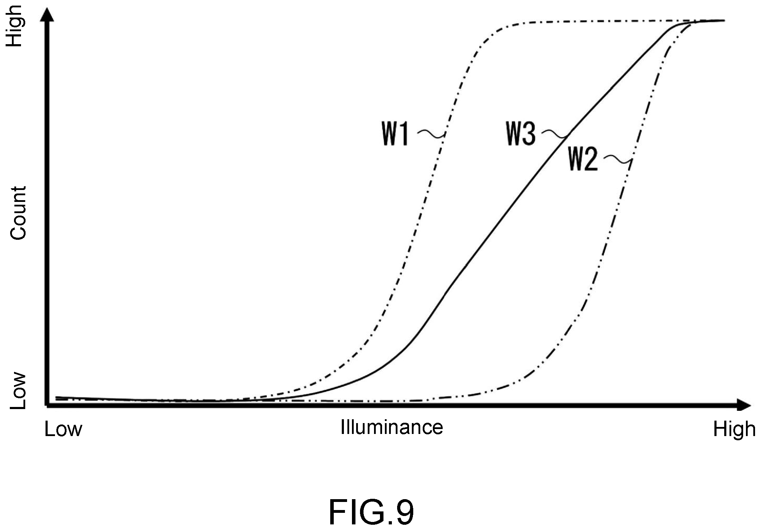

Fig. 9 is a graph illustrating the relationship between illuminance and the number of detected photons during each detection period. In Fig. 9, the vertical axis represents the number of detected photons (count), and the horizontal axis represents illuminance. In addition, Fig. 9 illustrates a curve W1 representing results of measurement using long detection periods, a curve W2 represent results of measurement using short detection periods, and a curve W3 representing results of measurement using long detection periods and short detection periods in combination. As represented by the curve W1, the measurement using long detection periods cannot ensure appropriate gradation in high illuminance regions. As represented by the curve W2, the measurement using short detection periods cannot ensure appropriate gradation in low illuminance regions. As represented by the curve W3, the measurement using long detection periods and short detection periods in combination can ensure appropriate gradation in wider illuminance regions.

As represented by the curve W3 in Fig. 9, the light detecting apparatus 10 according to the first embodiment of the present disclosure can expand the dynamic range by combining long detection periods and short detection periods to provide appropriate gradation to a wider illuminance range.

As illustrated in Fig. 6B, only one photon can be detected during one detection period regardless of the length of the detection period. Accordingly, in a case where long detection periods are used, the temporal resolution of an image to be generated lowers. The compression image generating section 14 in Fig. 1 generates an image on the basis of the measurement value of the counter 22. In a case where an image is generated on the basis of the number of photons detected using a plurality of detection periods with mutually different time widths that are combined as desired, image data (hereinbelow, a compression image) that has been spatiotemporally compressed can be generated taking into consideration a plurality of pixel regions with mutually different illuminance levels.

From the compression image mentioned above, an original image can be reconstructed using an existing reconstruction algorithm. It should be noted that the reconstructed original image exhibits image deterioration resulting from photon detection performed using a plurality of detection periods with mutually different time widths in combination.

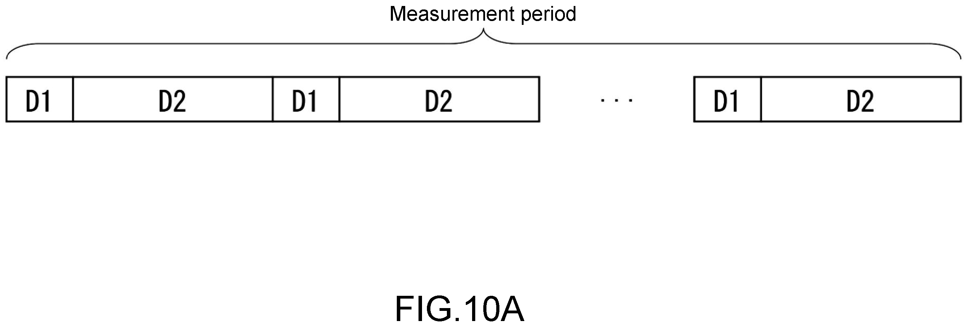

Fig. 10A illustrates an example in which photon detection is performed using short detection periods D1 and long detection periods D2 that are arranged alternately in a measurement period. It is assumed that the lengths of a plurality of the short detection periods D1 included in the measurement period are the same, and the lengths of a plurality of the long detection periods D2 included in the measurement period also are the same.

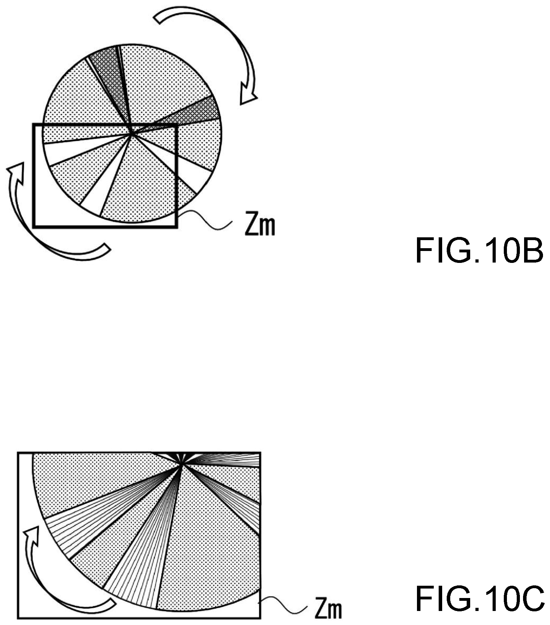

Fig. 10B illustrates a captured image of a disc-like rotating body captured using the measurement period in Fig. 10A. Fig. 10C is an enlarged view of an area Zm in the captured image in Fig. 10B. As illustrated in Fig. 10C, in a case where the short detection periods D1 and the long detection periods D2 are repeated alternately, periodic streaks are visible in the captured image. These streaks are called motion artifacts and serve as a factor in the deterioration of image quality of the captured image.

As described above, in image-capturing using the CLK-DET scheme, characteristic motion artifacts (hereinbelow, blur) dependent on the lengths and arrangement of a plurality of detection periods occur. As mentioned later, the light detecting apparatus 10 according to the first embodiment of the present disclosure is characterized by performing encoded exposure using a plurality of detection periods with mutually different time widths in combination to control the occurrence of blur in a compression image. Thereby, when reconstruction from a compression image is performed, a high image-quality reconstruction image in which motion artifacts like the ones in Fig. 10C do not occur can be generated.

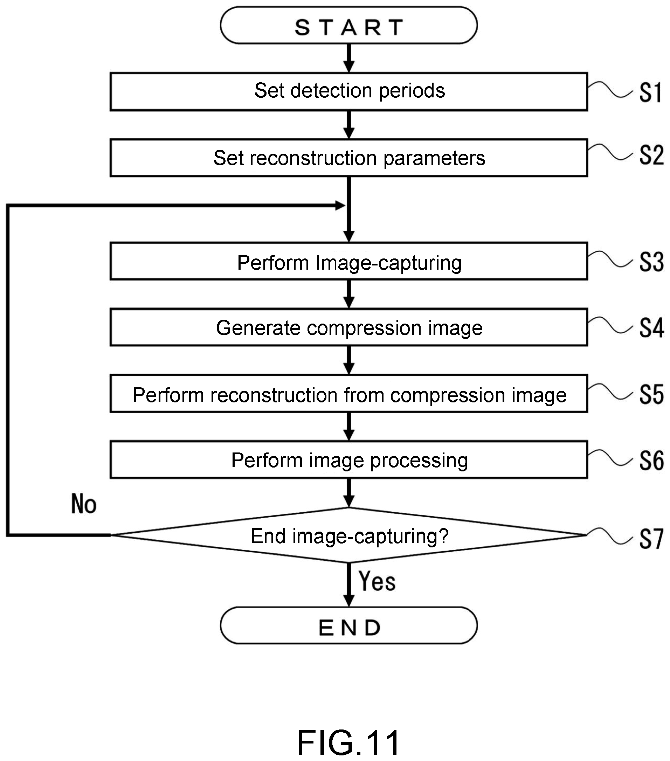

Fig. 11 is a flowchart of image generation performed by the light detecting apparatus 10 according to the first embodiment of the present disclosure. First, the optimizing section 17 sets detection periods for generating a compression image (Step S1). For example, the detection periods are set on the basis of first information stored in the information storage section 18. The first information includes setting information about the time width of each one of a plurality of detection periods. The information storage section 18 may have stored therein predetermined first information. More specifically, the first information may be stored in the information storage section 18 during the manufacturing phase of the light detecting apparatus 10 or may be stored in the information storage section 18 before the process at Step S1 is performed. The control of storing the first information in the information storage section 18 may be performed by the control section 13 or may be performed by an external apparatus different from the light detecting apparatus 10.

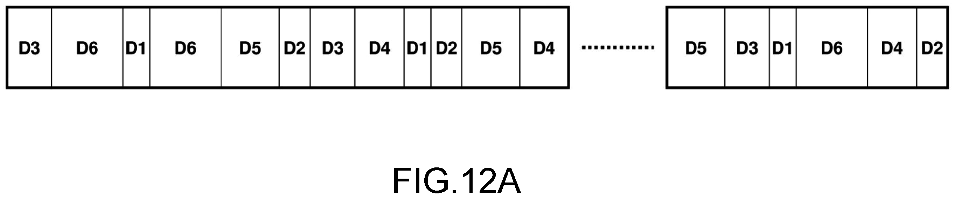

Fig. 12A illustrates a first configuration example of a measurement period according to the first embodiment of the present disclosure. At Step S1 in Fig. 11, multiple types of detection period (detection periods D1, D2, D3, D4, D5, and D6 in the example in Fig. 12A) are determined. In the measurement period illustrated in Fig. 12A, each of the detection periods D1 to D6 is arranged multiple times. Each of the detection periods D1 to D6 has a time width which has been optimized by the optimizing section 17 (i.e. an encoded time width). In the present specification, exposure performed during each one of a plurality of detection periods encoded by the optimizing section 17 is called encoded exposure. Each of the detection periods is an exposure period, and image-capturing is performed using a plurality of exposure periods with different time widths in combination.

The optimizing section 17 optimizes the time width of each of the plurality of detection periods such that information loss of the pixel signal Vimg is minimized. For example, the optimizing section 17 adjusts the time widths of the plurality of detection periods such that non-uniformity is intentionally introduced to the blur of a compression image. For example, information loss due to the blur can be reduced by generating long detection periods at portions in the pixel signal Vimg where information is sparse. As mentioned later, by introducing non-uniformity in the blur of a compression image, the spatiotemporal resolution can be enhanced at the time of generation of a reconstruction image.

In addition, the optimizing section 17 optimizes the arrangement of the detection periods D1 to D6. For example, the detection periods D1 to D6 are arranged without periodicity (e.g. randomly). The time widths and arrangement of the detection periods D1 to D6 may be determined empirically or through machine learning.

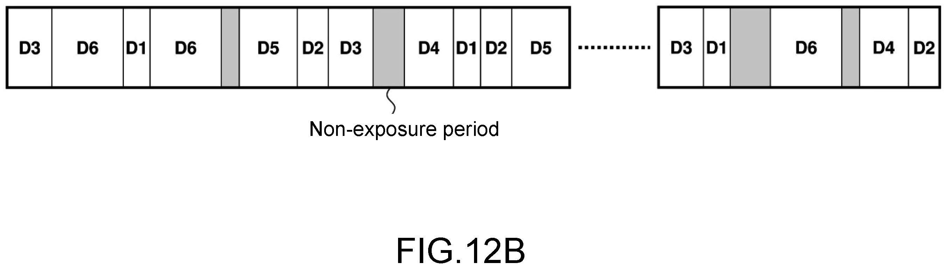

In the measurement period in Fig. 12A, detection periods of a plurality of the detection periods D1 to D6 are arranged without gaps in the time-axis direction. A non-exposure period may be arranged between each pair of detection periods. Fig. 12B illustrates a second configuration example of a measurement period according to the first embodiment of the present disclosure. The measurement period in Fig. 12B is different from the measurement period in Fig. 12A in that the measurement period in Fig. 12B has one or more non-exposure periods. That is, in the measurement period in Fig. 12B, at least some pairs of detection periods adjacent to each other in the time-axis direction are provided such that the detection periods of each of the at least some pairs are spaced from each other in the time-axis direction. The time width and arrangement of each non-exposure period may be determined randomly or may be determined empirically or through machine learning.

Note that information about a plurality of detection periods included in the first information is set within the limits of hardware constraints or design rule constraints. For example, the hardware constraints or the design rule constraints include the control scheme of the pixel array section 11 (uniform control of all pixels, control in the units of pixel rows, control in the units of pixel columns, or control in the units of pixels), the number of types of detection periods that can be set, the number of each detection period, and the like.

Next, the information setting section 19 sets reconstruction parameters in the reconstruction image generating section 15 (Step S2). Predetermined reconstruction parameters may be input to the information setting section 19. Specifically, reconstruction parameters that have been input at the time of manufacture of the light detecting apparatus 10 or the like may be set, reconstruction parameters generated through machine learning may be set, or reconstruction parameters input from an external apparatus different from the light detecting apparatus 10 may be set. Note that the processing order of Steps S1 and S2 may be determined as desired or Steps S1 and S2 may be performed simultaneously.

Next, an image of a subject is captured using the plurality of pixels 20 in the pixel array section 11 (Step S3). The control section 13 supplies the clip signal CLIP, the control signal XRST, and the like to each pixel 20 on the basis of the detection periods D1 to D6 illustrated in Fig. 12A or the like and controls operations performed by the pixels 20. Note that the time widths of the plurality of detection periods D1 to D6 may be the same across all the pixels 20 in the pixel array section 11 or the time widths of the detection periods D1 to D6 may differ from pixel to pixel.

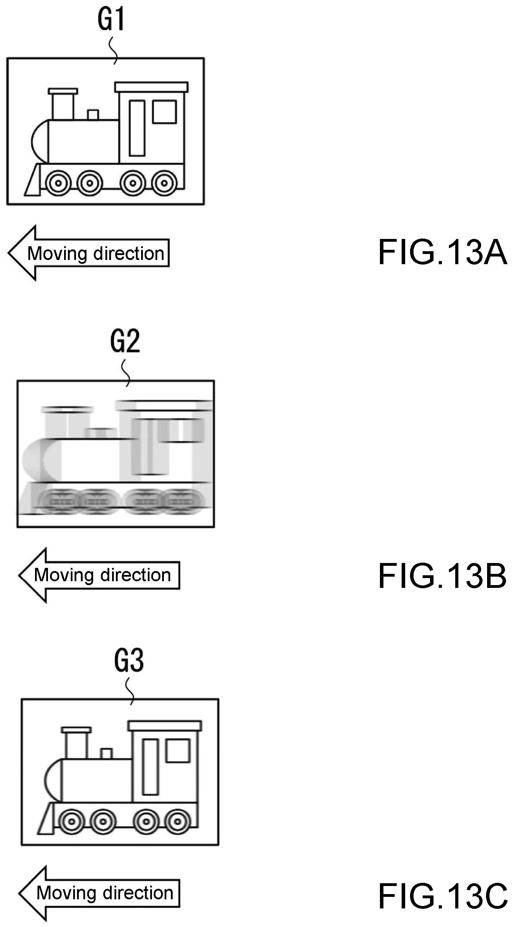

Fig. 13A illustrates a subject G1 captured at Step S3. For example, the subject G1 is a moving object moving in the left direction in Fig. 13A.

The compression image generating section 14 generates a compression image on the basis of a plurality of the pixel signals Vimg output by the plurality of pixels 20 (and the pixel circuits) (Step S4). Fig. 13B illustrates an example of a compression image G2 generated at Step S4. The compression image G2 is an image compressed spatially and temporally. Since the compression image G2 is generated by repeating exposure during a plurality of detection periods with different time widths, blur occurs. The blur of the compression image G2 occurs depending on the encoded time widths of the plurality of detection periods D1 to D6. That is, the compression image generating section 14 generates a compression image on the basis of the plurality of pixel signals Vimg generated during the plurality of detection periods set on the basis of the first information.

At Step S4 in Fig. 11, a compression image of one frame may be generated on the basis of the pixel signals Vimg of a plurality of frames. Thereby, the data rate between the compression image generating section 14 and the reconstruction image generating section 15 in Fig. 1 can be lowered. In this case, the reconstruction image generating section 15 generates reconstruction images of a plurality of frames from a compression image of one frame.

Next, the reconstruction image generating section 15 performs reconstruction from the compression image G2 on the basis of the reconstruction parameters set at Step S2 and generates a reconstruction image (Step S5). Fig. 13C illustrates a reconstruction image G3 reconstructed at Step S5. The reconstruction image generating section 15 is capable of reconstructing the reconstruction image G3 with enhanced spatiotemporal resolution by performing the reconstruction from the compression image with non-uniform blur.

The image processing section 16 generates a reconstruction image by performing predetermined image processing on the reconstruction image G3 (Step S6). Next, it is decided whether to end the image-capturing (Step S7). In a case where the image-capturing is to be continued, the processes at and after Step S3 are repeated.

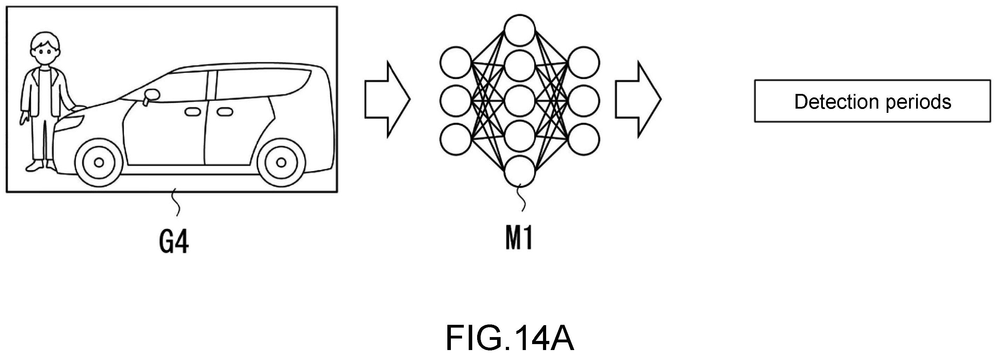

For example, the optimizing section 17 is capable of optimizing detection periods using a machine learning technique. Fig. 14A is a conceptual diagram illustrating an example in which the optimizing section 17 optimizes detection periods by a machine learning technique. In the example in Fig. 14A, the optimizing section 17 has a learning model M1. During the training phase of the learning model M1, the learning model M1 is trained using image data G4 whose plurality of detection periods is known, as input parameters of the learning model M1. For example, the image data G4 input to the learning model M1 during the training phase of the learning model M1 is image data of a typical scheme obtained through image-capturing performed by photoelectric conversion in accordance with an incident light amount, similarly to a typical image sensor without adopting the CLK-DET scheme. The learning model M1 includes a plurality of layers. Each layer is provided with a plurality of nodes, and nodes between two adjacent layers are coupled by links. During the training phase of the learning model M1, each combination of one of a plurality of pieces of the image data G4 obtained through image-capturing of various subjects by the typical scheme and a plurality of known detection periods of the image data is used as teaching data, and the weight of each link of the learning model M1 is updated such that, when each piece of image data included in the teaching data is input to the learning model M1, the corresponding plurality of detection periods is output.

By inputting image data that has been obtained through image-capturing by the typical scheme and whose detection periods are unknown to the trained learning model M1, a plurality of optimum detection periods can be output from the learning model M1.

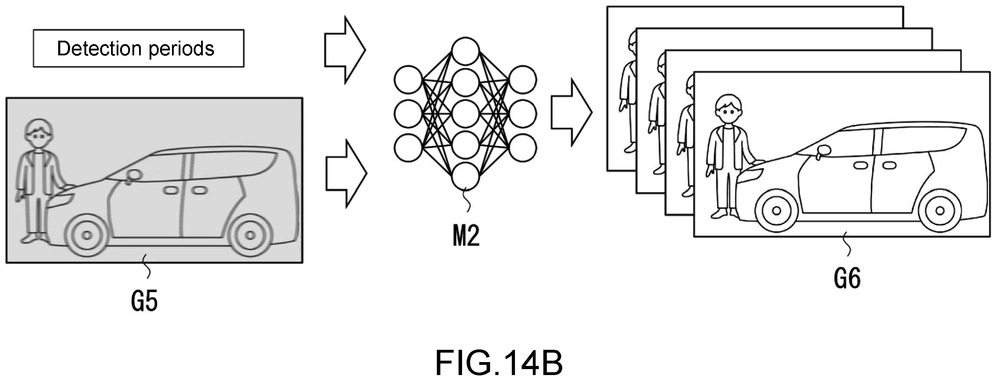

Similarly, for example, the information setting section 19 is capable of optimizing reconstruction parameters using a machine learning technique. Fig. 14B is a diagram for explaining machine learning of reconstruction parameters according to the first embodiment of the present disclosure. A learning model M2 illustrated in Fig. 14B is aimed at inferring reconstruction parameters using detection periods and a compression image G5 as input parameters. Note that either of the detection periods or the compression image G5 may be omitted from the input parameters. The learning model M2 includes a plurality of layers. Each layer is provided with a plurality of nodes, and nodes between two adjacent layers are coupled by links. During the training phase of the learning model M2, each combination of detection periods and compression images G5, and known reconstruction parameters for reconstructing reconstruction images G6 from the compression image G5 is input to the learning model M2 as teaching data, and the weight of each link of the learning model M2 is updated such that the known reconstruction parameters are output from the learning model M2. During the training phase, the weight updating of the learning model M2 is repeated using a plurality of compression images G5. During the training phase, it is desirable to train the learning model M2 by inputting various compression images G5 that differ in subject and background type, size, luminance, and color tone.

Reconstruction parameters can be inferred by inputting, to the trained learning model M2, detection periods and a compression image whose reconstruction parameters are unknown.

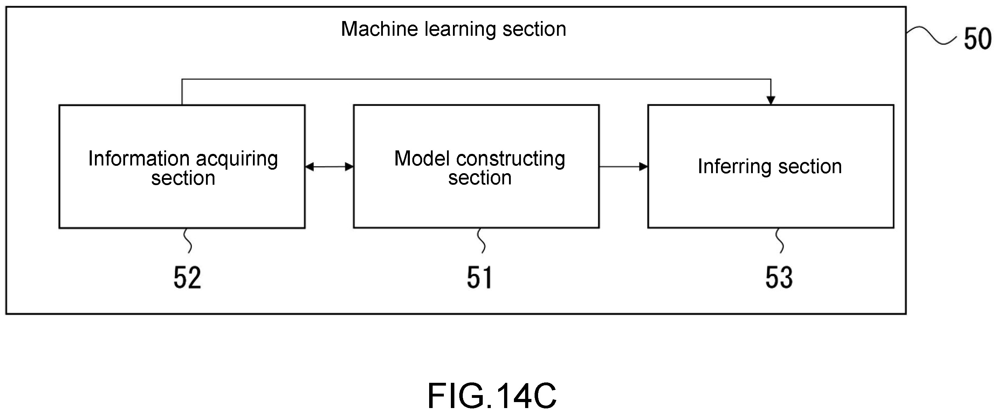

Fig. 14C is a block diagram illustrating the configuration of a machine learning section 50 that infers reconstruction parameters using the machine learning technique illustrated in Fig. 14B. For example, the machine learning section 50 is disposed in the information setting section 19. As illustrated in Fig. 14C, the machine learning section 50 has a model constructing section 51, an information acquiring section 52, and an inferring section 53. The model constructing section 51 constructs the learning model M2 through machine learning. The information acquiring section 52 acquires multiple types of compression image and a plurality of detection periods corresponding to each compression image. The inferring section 53 inputs, to the learning model M2, a plurality of detection periods and a compression image acquired at the information acquiring section 52 and infers reconstruction parameters for reconstructing a compression image whose reconstruction parameters are unknown.

Similarly, the machine learning section 50 may infer a plurality of optimum detection periods using the machine learning technique illustrated in Fig. 14A. In this case, for example, the machine learning section 50 is disposed in the optimizing section 17. The model constructing section 51 constructs the learning model M1, the information acquiring section 52 acquires image data whose plurality of detection periods is known, and the inferring section 53 infers a plurality of optimum detection periods using the learning model M1.

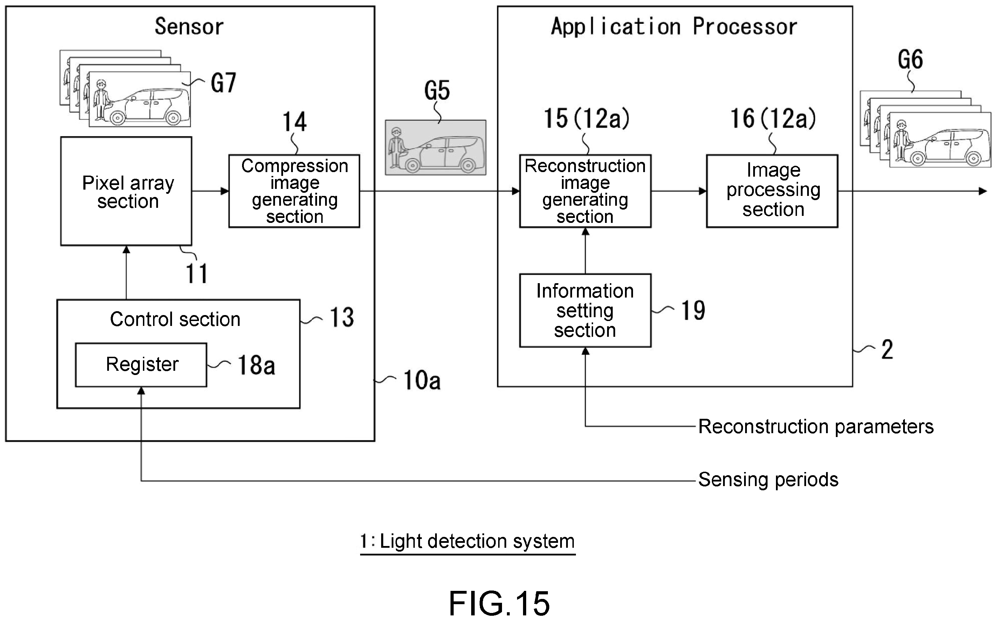

Fig. 15 is a block diagram illustrating a light detection system 1 according to the first embodiment of the present disclosure. The light detection system 1 has a light detecting apparatus (Sensor) 10a and a signal processing apparatus (Application Processor) 2. The light detecting apparatus 10a in Fig. 15 has internal configuration which is partially different from that of the light detecting apparatus 10 in Fig. 1. Part of the internal configuration of the signal processing section 12 that the light detecting apparatus 10 in Fig. 1 has is omitted from the light detecting apparatus 10a in Fig. 15. Specifically, the reconstruction image generating section 15 and the image processing section 16 that the signal processing section 12 in Fig. 1 has are not provided to the light detecting apparatus 10a in Fig. 15, but are provided to the signal processing apparatus 2. Note that, for example, the light detecting apparatus 10a and the signal processing apparatus 2 may be provided to separate chips or may be integrated on one chip.

The light detecting apparatus 10a outputs a compression image G5 based on incident light. The light detecting apparatus 10a has the pixel array section 11, the compression image generating section 14, and the control section 13. The control section 13 has a register 18a. Similarly to the information storage section 18 in Fig. 1, the register 18a stores therein first information related to detection periods.

The signal processing apparatus 2 generates reconstruction images G6 on the basis of the compression image G5 and performs predetermined image processing. The signal processing apparatus 2 has the reconstruction image generating section 15, the image processing section 16, and the information setting section 19. The image processing section 16 performs predetermined signal processing on the basis of the reconstruction images. The reconstruction image generating section 15 and the image processing section 16 are included in a signal processing section 12a. In addition to the constituent elements described above, the signal processing apparatus 2 may have an image display section, an output interface, or the like. Thereby, the light detection system 1 is capable of capturing images of a subject G7.

For example, the light detecting apparatus 10a and the signal processing apparatus 2 can include mutually different semiconductor chips. As a more specific implementation mode example, the light detecting apparatus 10a and the signal processing apparatus 2 may both be disposed in one apparatus (e.g. a smartphone). In this case, for example, the light detecting apparatus 10a is an image sensor, and, for example, the signal processing apparatus 2 is an application processor.

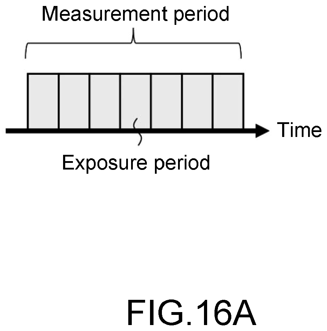

Fig. 16A illustrates an image-capturing operation performed by a light detecting apparatus according to a first comparative example. The light detecting apparatus according to the first comparative example is different from the light detecting apparatus 10 Fig. 1 in that the light detecting apparatus according to the first comparative example does not perform encoded exposure. In the measurement period in Fig. 16A, exposure periods of a plurality of exposure periods each having a certain time width are arranged without gaps. The measurement period in Fig. 16A is also called a long exposure period.

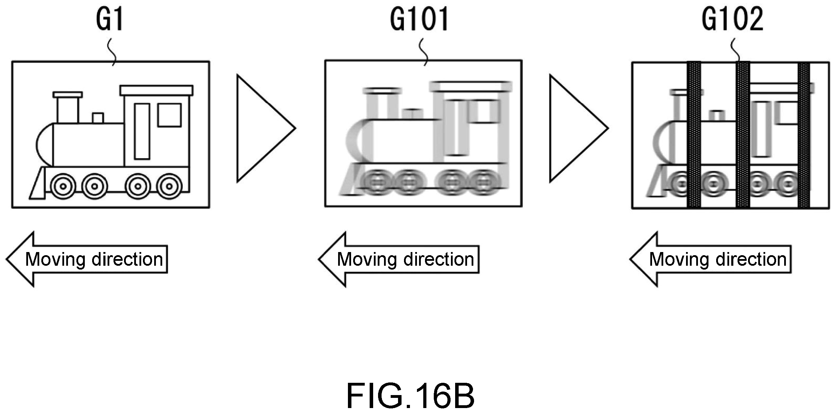

Fig. 16B illustrates a compression image G101 and a reconstruction image G102 according to the first comparative example. Blur has occurred in the compression image G101 in Fig. 16B. The blur in the compression image G101 occurs uniformly since the blur is not controlled by encoded exposure. The reconstruction image G102 reconstructed from the compression image G101 has deteriorated image quality undesirably due to information loss resulting from the blur. Because of this, the light detecting apparatus the according to the first comparative example is not capable of generating high-quality images.

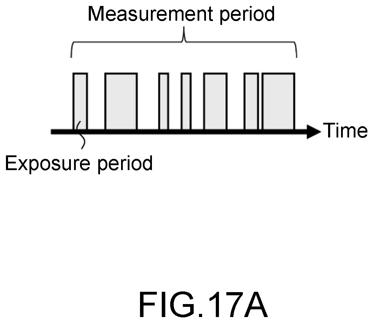

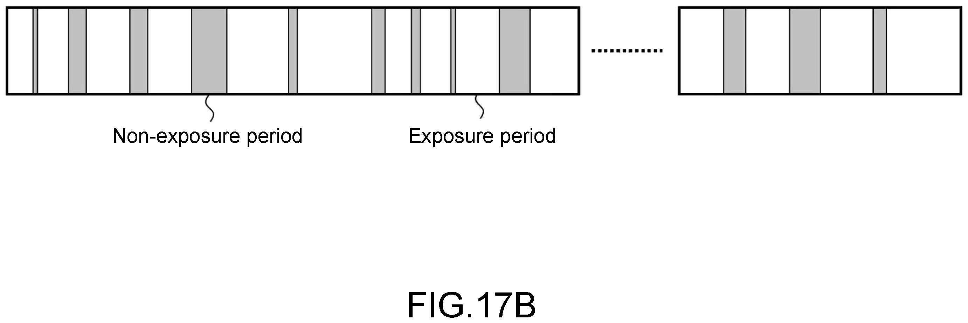

Fig. 17A illustrates an image-capturing operation performed by a light detecting apparatus according to a second comparative example. The light detecting apparatus according to the second comparative example provides a plurality of non-exposure periods in a measurement period by shutter control and encodes exposure periods. Encoding the exposure periods results in exposure in exposure periods with various time widths, and the blur of a captured image can be given non-uniformity. Fig. 17B schematically illustrates a measurement period of the light detecting apparatus according to the second comparative example. As illustrated in Fig. 17B, during the measurement period according to the second comparative example, a non-exposure period is necessarily arranged between each pair of adjacent exposure periods. Accordingly, the amount of exposure light that can be taken in during the measurement period is reduced, and the SN (Signal-Noise) ratio of a reconstruction image lowers undesirably.

The light detecting apparatus 10 according to the first embodiment of the present disclosure can control the blur of a compression image by encoded exposure compared with the light detecting apparatus according to the first comparative example. Accordingly, the light detecting apparatus 10 is capable of minimizing information loss resulting from compression and reconstruction and outputting high-quality images. In addition, compared with the light detecting apparatus according to the second comparative example, the light detecting apparatus 10 need not necessarily provide a non-exposure period between each pair of exposure periods (i.e. each pair of detection periods) and is capable of increasing the amount of exposure light during a measurement period. Thereby, the light detecting apparatus 10 is capable of outputting a reconstruction image with a higher S/N ratio than in the second comparative example.

In this manner, since detection periods for the CLK-DET scheme are optimized in the first embodiment of the present disclosure, a compression image including non-uniform blur can be generated, and spatiotemporal resolution after reconstruction can be enhanced. In addition, since all detection periods are arranged without gaps, and non-exposure periods are not provided, the amount of exposure light can be increased, and the S/N ratio can be enhanced. In addition, a compression image of one frame is generated on the basis of pixel signals of a plurality of frames, and reconstruction images of a plurality of frames can be generated from a compression image of one frame. Thereby, the data rate between the compression image generating section 14 and the reconstruction image generating section 15 can be lowered, thereby enabling reduction of the effect of noise, and enabling reduction of hardware costs. Therefore, incorporation into a mobile apparatus such as a smartphone becomes easier. As described above, the light detecting apparatus 10 according to the first embodiment of the present disclosure is capable of enhancing spatiotemporal resolution and capable of generating high-quality images.

### (Second Embodiment)

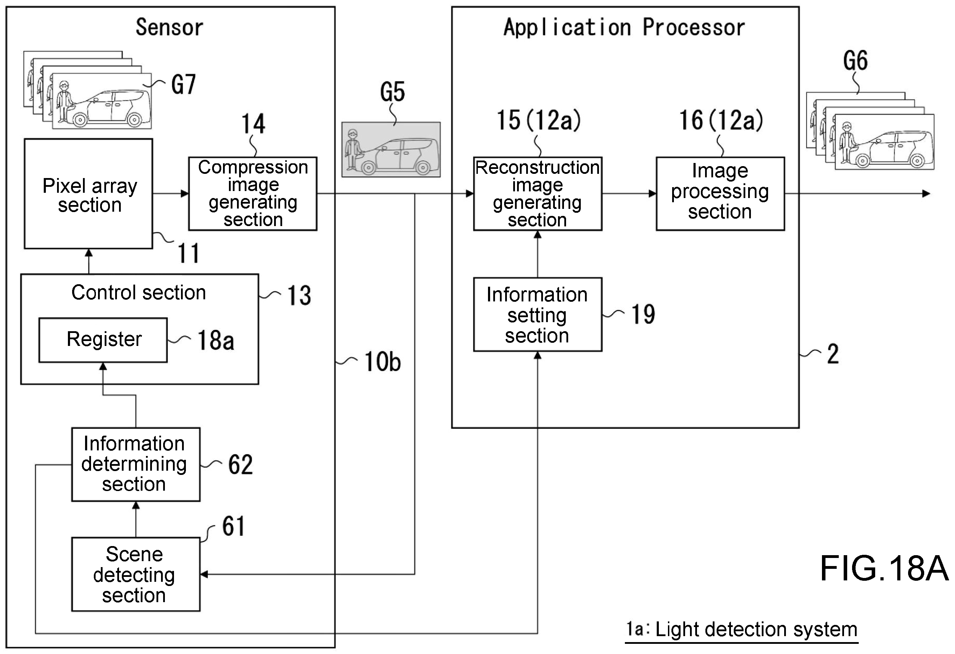

In the first embodiment of the present disclosure, preset detection periods and reconstruction parameters are used. Detection periods and reconstruction parameters may be dynamically determined in accordance with the image-capturing scene. Fig. 18A is a block diagram illustrating a first configuration example of the light detection system 1 according to a second embodiment of the present disclosure. A light detection system 1a illustrated in Fig. 18A has a light detecting apparatus 10b. The light detecting apparatus 10b has a scene detecting section 61 and an information determining section 62.

The scene detecting section 61 acquires a compression image G5 from the compression image generating section 14. The scene detecting section 61 detects features (e.g. the subject type or illuminance) of the compression image G5. On the basis of the features of the compression image G5 detected by the scene detecting section 61, the information determining section 62 determines first information and second information (i.e. detection periods and reconstruction parameters). The information determining section 62 performs the process of determining the detection periods in this manner and accordingly encompasses the function of the optimizing section 17 in Fig. 1. The information determining section 62 inputs the first information to the register 18a and inputs the second information to the information setting section 19. The features of the compression image G5 detected by the scene detecting section 61 are also called features of an image-capturing scene.

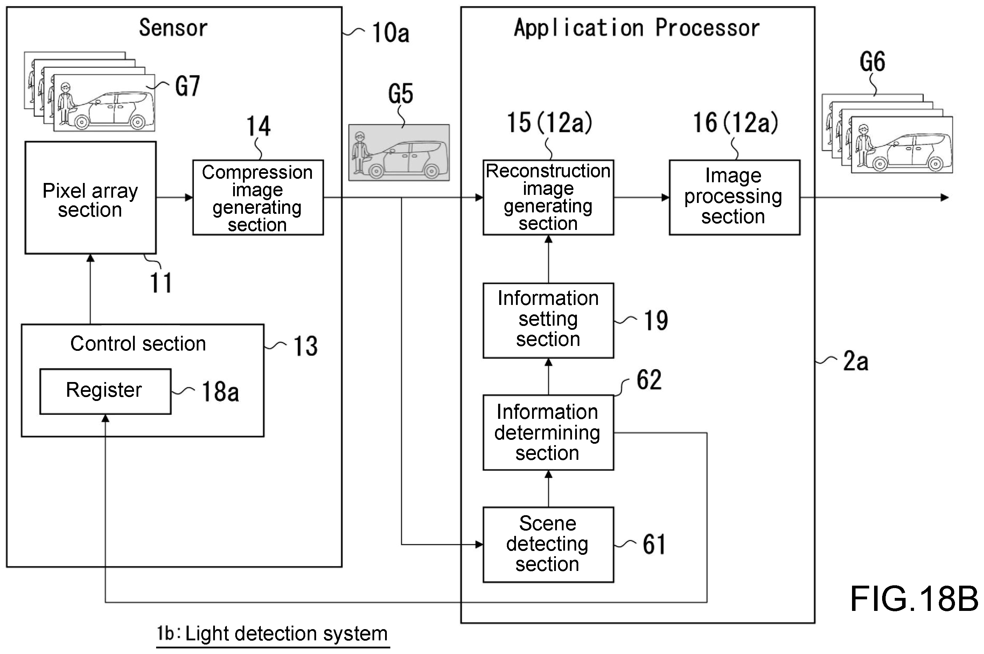

Fig. 18B is a block diagram illustrating a second configuration example of the light detection system 1 according to the second embodiment of the present disclosure. A light detection system 1b illustrated in Fig. 18B is different from the light detection system 1a in Fig. 18A in that the scene detecting section 61 and the information determining section 62 are disposed in a signal processing apparatus 2a. Note that the scene detecting section 61 and the information determining section 62 may be applied to the light detecting apparatus 10 in Fig. 1.

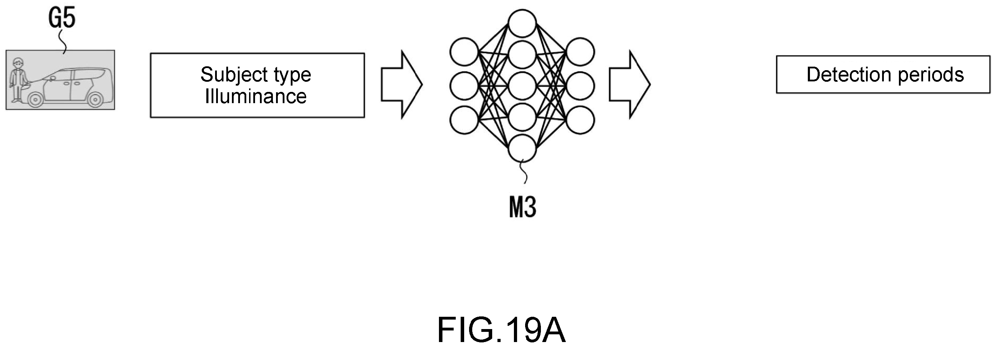

The information determining section 62 may determine detection periods or reconstruction parameters through machine learning. Fig. 19A is a diagram for explaining machine learning of detection periods according to the second embodiment of the present disclosure. A learning model (second learning model) M3 illustrated in Fig. 19A is aimed at inferring optimum detection periods using, as input parameters, features of a compression image G5 detected by the scene detecting section 61. Similarly to the learning model M2 mentioned above, the weight of each link connecting nodes of two adjacent layers in the learning model M3 can be updated. During the training phase of the learning model M3, features of a compression image whose detection periods are known are input to the learning model M3, and the weight of each link is updated such that the corresponding detection periods are output. A plurality of compression images that corresponds to features of various subject images and whose detection periods are known are input to the learning model M3, and the weight updating of the learning model M3 is repeated.

By inputting, to the trained learning model M3, features of a compression image detected by the scene detecting section 61 in a new subject image, it is possible to cause the learning model M3 to output optimum detection periods.

Note that, as in Fig. 14A, as input parameters of the learning model M, image data of the typical scheme obtained through image-capturing performed by photoelectric conversion in accordance with an incident light amount similarly to a typical image sensor without adopting the CLK-DET scheme may be used.

Features of a subject may be a compression image itself. That is, the learning model M3 may infer detection periods corresponding to a compression image using a compression image as an input parameter. In this case, in a case where the amount of data of the compression image is large, data compression may further be performed at the scene detecting section 61, and data obtained thereby may be input to the learning model M3.

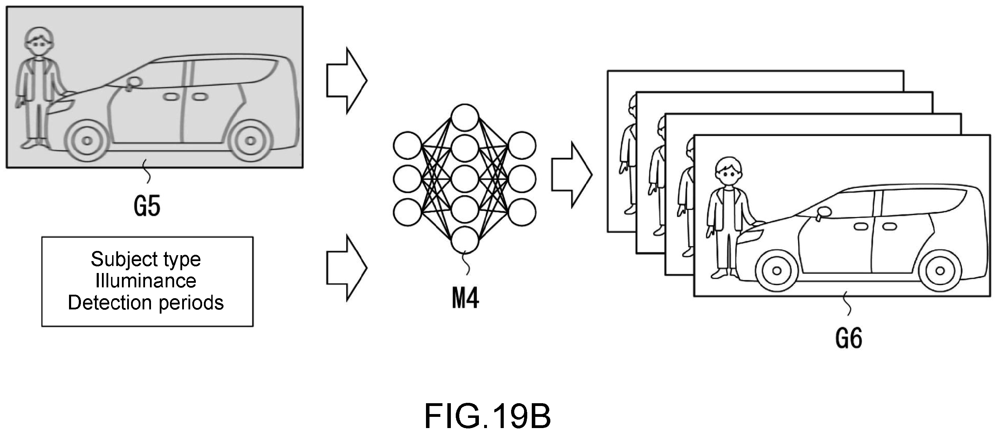

Fig. 19B is a diagram for explaining machine learning of reconstruction parameters according to the second embodiment of the present disclosure. Reconstruction parameters are determined by the information determining section 62 similarly to detection periods. The information determining section 62 has a learning model M4 for reconstruction parameters. The learning model M4 illustrated in Fig. 19B is aimed at inferring reconstruction parameters. Similarly to the learning model M2 mentioned above, the weight of each link connecting nodes of two adjacent layers in the learning model M4 can be updated. During the training phase of the learning model M4, compression images G5, features of the compression images G5 detected by the scene detecting section 61, and known reconstruction parameters for reconstructing reconstruction images G6 from the compression images G5 are input to the learning model M4, and the weight of each link is updated such that the corresponding reconstruction parameters are output from the learning model M4. A plurality of compression images G5 that corresponds to features of various subjects and whose reconstruction parameters are known is input to the learning model M4, and the weight updating of the learning model M4 is repeated.

By inputting, to the trained learning model M4, a compression image G5 and features of the compression image detected by the scene detecting section 61 regarding a new subject, it is possible to cause the learning model M4 to output optimum reconstruction parameters. In addition, as in Fig. 14C, the information determining section 62 may have the machine learning section 50.

In this manner, in the second embodiment, the learning models M3 and M4 are trained in advance by inputting, to the learning models M3 and M4, features of various compression images whose detection periods and reconstruction parameters are known, and feature of a compression image detected by the scene detecting section 61 are input as input parameters to the trained learning models M3 and M4. Thereby, detection periods and reconstruction parameters matching the features of the compression image can be generated simply.

### (Third Embodiment)

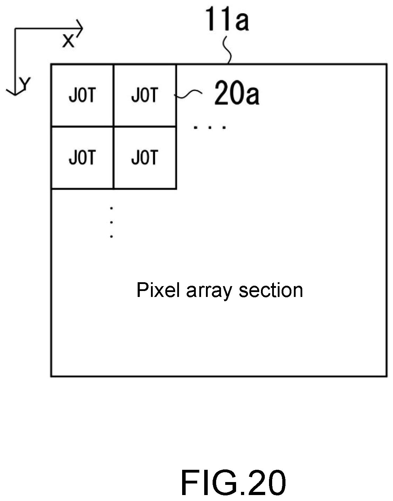

The light detecting apparatuses 10 according to the first embodiment and second embodiment of the present disclosure measure the number of photons using a SPAD. In contrast to this, a light detecting apparatus 10 according to a third embodiment of the present disclosure is characterized by measuring the number of photons using a QIS (Quanta Image Sensor). Fig. 20 is a block diagram illustrating the configuration of a pixel array section 11a according to the third embodiment of the present disclosure. The pixel array section 11a has a plurality of jots (JOT) 20a. The plurality of jots 20a is included in the QIS. Each of the plurality of jots 20a has a photoelectric converting element. The jots 20a are pixels with low saturation capacity (e.g. lower than the diffraction limitation).

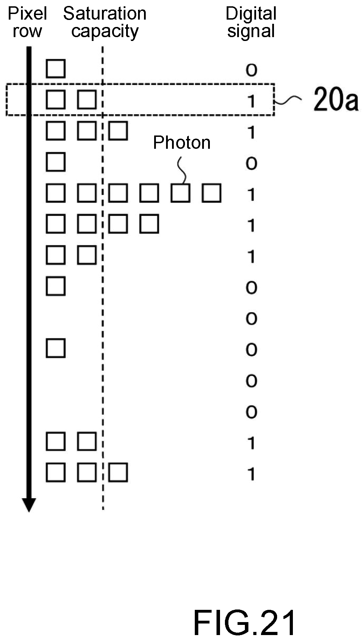

Fig. 21 is a diagram for explaining an operation performed by a jot 20a according to the third embodiment of the present disclosure. A photoelectric converting element in the jot 20a detects a photon and generates electric charge. In a case where the electric charge of the photoelectric converting element has reached the saturation capacity, the jot 20a outputs a digital signal of 1 or 0 (e.g. 1). Since the jot 20a has capacity equivalent to photons corresponding to only a few electrons (two electrons in the example in Fig. 21), photons can be detected on the basis of whether the capacity of the jot 20a is saturated.

The jot 20a is capable of detecting photons similarly to a SPAD, without using avalanche multiplication. Since the jot 20a is capable of detecting photons with an area size smaller than that of a SPAD, the jot 20a can enhance resolution. In addition, the jot 20a consumes less low electric power than a SPAD does.

For example, photon detection periods of the jot 20a can be adjusted by adjusting recharge periods of the photoelectric converting element. Thereby, using the QIS, the light detecting apparatus 10 according to the third embodiment of the present disclosure can implement encoded exposure illustrated in the first embodiment and second embodiment of the present disclosure.

### (Application Examples)

The technology according to the present disclosure can be applied to various products. For example, the technology according to the present disclosure may be implemented as an apparatus to be mounted on any type of mobile body such as an automobile, an electric automobile, a hybrid electric automobile, a motorcycle, a bicycle, a personal mobility, an airplane, a drone, a ship, a robot, a construction machine, or an agricultural machine (tractor).

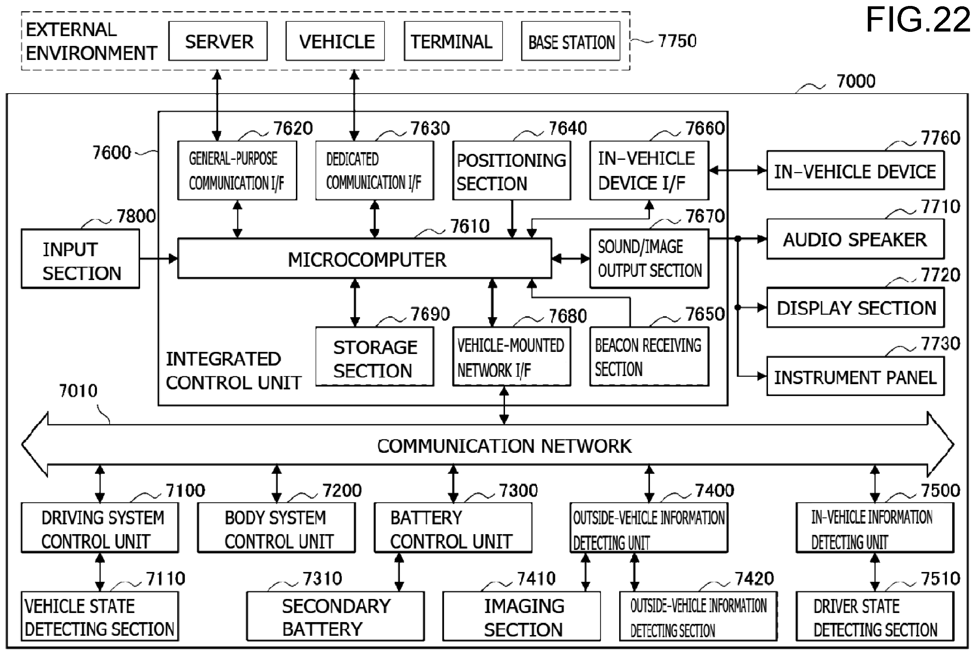

Fig. 22 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in Fig. 22, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in Fig. 22 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

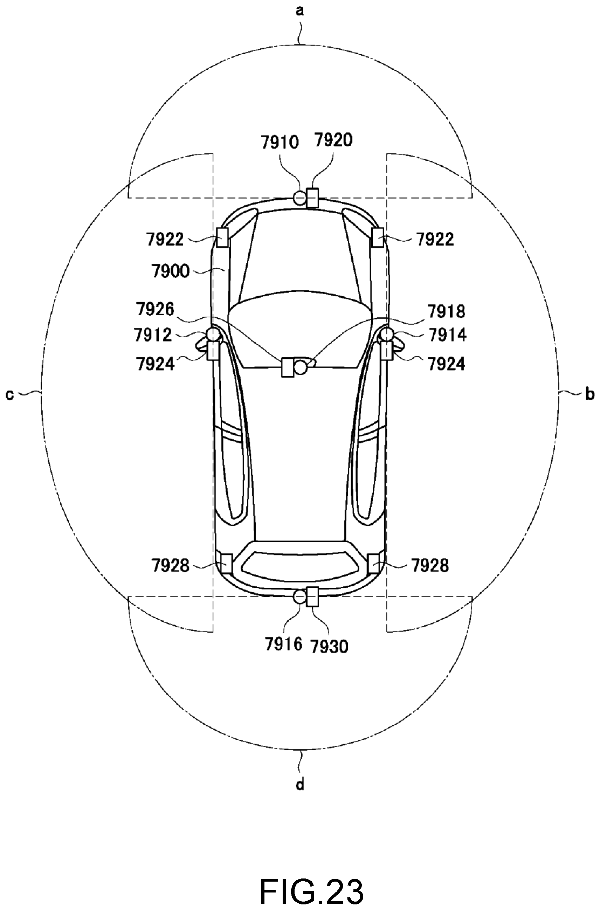

Fig. 23 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, Fig. 23 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to Fig. 22, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magnetooptical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of Fig. 22, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in Fig. 22 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that a computer program for realizing each function of the signal processing apparatus 2 according to the present embodiment explained using Fig. 15 can be implemented on any control unit or the like. In addition, a computer-readable recording medium having stored therein such a computer program can also be provided. For example, the recording medium is a magnetic disc, an optical disc, a magnetooptical disc, a flash memory, or the like. In addition, for example, the computer program described above may be distributed through a network, without using a recording medium. Furthermore, the computer program described above in an encrypted, modulated, or compressed state may be distributed through a cable line or a wireless line such as the Internet or may be put in a recording medium and distributed.

In the vehicle control system 7000 explained above, the light detecting apparatus 10 according to the present embodiment explained using Fig. 1 can be applied to the imaging section 7410 in the application example illustrated in Fig. 22. Thereby, the imaging section 7410 can output high-quality images at high speeds.

Note that the present technology can have the following configurations.
(1) A light detecting apparatus including:
   a plurality of two-dimensionally arrayed pixels; and
   a signal processing section that generates an image on the basis of a pixel signal output from each of the plurality of pixels, in which
   each of the plurality of pixels has
      a photoelectric converting element that detects an incident photon, and
      a pixel circuit that generates the pixel signal on the basis of whether the photoelectric converting element has detected a photon in each one of a plurality of detection periods arranged sequentially in a time-axis direction, and
   each of the plurality of detection periods has an encoded time width.
(2) The light detecting apparatus according to (1), further including
   an optimizing section that optimizes the time width of each of the plurality of detection periods.
(3) The light detecting apparatus according to (2), in which
   the optimizing section optimizes the time width of each of the plurality of detection periods such that information loss of the pixel signal is minimized.
(4) The light detecting apparatus according to (2), in which
   the optimizing section randomly sets the time width of each of the plurality of detection periods.
(5) The light detecting apparatus according to any one of (1) to (4), in which
   detection periods of the plurality of detection periods are arranged without gaps in the time-axis direction.
(6) The light detecting apparatus according to any one of (1) to (3), in which
   at least some pairs of detection periods included in the plurality of detection periods and adjacent to each other in the time-axis direction are provided such that the detection periods of each of the at least some pairs are spaced from each other in the time-axis direction.
(7) The light detecting apparatus according to any one of (1) to (6), in which
   the pixel circuit generates the pixel signal including a number of detection periods included in the plurality of detection periods and in which a photon has been incident.
(8) The light detecting apparatus according to any one of (1) to (7), in which
   the signal processing section includes
   a compression image generating section that generates a compression image that has been compressed spatially and temporally on the basis of a plurality of the pixel signals output from the plurality of pixels, and
   a reconstruction image generating section that generates, on the basis of the compression image, a reconstruction image with enhanced spatiotemporal resolution, compared to the compression image.
(9) The light detecting apparatus according to (8), further including:
   an information storage section that stores therein first information for setting the time width of each of the plurality of detection periods; and
   an information setting section that sets second information necessary for generating the reconstruction image, in which
   the compression image generating section generates the compression image of one frame on the basis of a plurality of the pixel signals of a plurality of frames generated during the plurality of detection periods set on the basis of the first information, and
   the reconstruction image generating section generates the reconstruction image from the compression images of a plurality of frames on the basis of the second information.
(10) The light detecting apparatus according to (9), in which
   the information storage section stores therein the first information determined in advance, and
   the information setting section sets the second information determined in advance.
(11) The light detecting apparatus according to (9), further including:
   a scene detecting section that detects a feature of the compression image; and
   an information determining section that determines the first information and the second information on the basis of the feature of the compression image detected by the scene detecting section.
(12) The light detecting apparatus according to (11), in which
   the information determining section determines the first information and the second information on the basis of a feature including at least one of a type of subject included in the compression image, or illuminance.
(13) The light detecting apparatus according to any one of (1) to (12), in which
   the photoelectric converting element has a SPAD (Single Photon Avalanche Diode).
(14) The light detecting apparatus according to any one of (1) to (12), in which
   the photoelectric converting element is provided for each jot of a QIS (Quanta Image Sensor).
(15) A light detection system including:
   a light detecting apparatus that generates a plurality of pixel signals by photoelectric conversion; and
   a signal processing apparatus that generates an image on the basis of the plurality of pixel signals, in which
   the light detecting apparatus has a plurality of two-dimensionally arrayed pixels generating the plurality of pixel signals,
   each of the plurality of pixels has
      a photoelectric converting element that detects an incident photon, and
      a pixel circuit that generates the pixel signal on the basis of whether the photoelectric converting element has detected a photon in each one of a plurality of detection periods arranged sequentially in a time-axis direction, and
   each of the plurality of detection periods has an encoded time width.
(16) The light detection system according to (15), in which
   the light detecting apparatus has a compression image generating section that generates, on the basis of the plurality of pixel signals, a compression image that has been compressed spatially and temporally, and
   the signal processing apparatus has a reconstruction image generating section that generates, on the basis of the compression image, a reconstruction image with enhanced spatiotemporal resolution, compared to the compression image.
(17) The light detection system according to (16), in which
   the signal processing apparatus has
   an information storage section that stores therein first information for setting the time width of each of the plurality of detection periods,
   an information setting section that sets second information necessary for generating the reconstruction image,
   a scene detecting section that detects a feature of the compression image, and
   an information determining section that determines the first information and the second information on the basis of the feature of the compression image detected by the scene detecting section.
(18) The light detection system according to (16), in which
   the light detecting apparatus has
   an information storage section that stores therein first information for setting the time width of each of the plurality of detection periods,
   an information setting section that sets second information necessary for generating the reconstruction image,
   a scene detecting section that detects a feature of the compression image, and
   an information determining section that determines the first information and the second information on the basis of the feature of the compression image detected by the scene detecting section.
(19) The light detection system according to any one of (16) to (18), in which
   the signal processing apparatus has a signal processing section that performs predetermined signal processing on the basis of the reconstruction image.
(20) The light detection system according to any one of (15) to (19), in which
   the light detecting apparatus and the signal processing apparatus include mutually different semiconductor chips.
(21) An information processing apparatus including:
   a model constructing section
      that uses, as teaching data, image data obtained through image-capturing performed by photoelectric conversion according to an incident light amount, and a plurality of known detection periods for photon detection corresponding to the image data, and
      that trains a learning model such that, when the image data included in the teaching data is input to the learning model, the corresponding plurality of known detection periods is output; and
   an inferring section
      that inputs, to the learning model having been trained by the model constructing section, image data that has been obtained through image-capturing performed by photoelectric conversion according to an incident light amount and whose plurality of optimum detection periods is unknown, and
      that causes the trained learning model to output the plurality of optimum detection periods.
(22) An information processing apparatus including:
   a model constructing section
      that uses, as teaching data, a compression image whose reconstruction parameter for reconstructing an uncompressed image generated on the basis of a photon detected during a plurality of detection periods for photon detection is known, and the reconstruction parameter, and
      that trains a learning model such that, when the compression image whose reconstruction parameter is known is input to the learning model, the corresponding reconstruction parameter is output; and
   an inferring section
      that inputs, to the learning model having been trained by the model constructing section, a new compression image whose reconstruction parameter is unknown, and
      that causes the trained learning model to output the corresponding reconstruction parameter.
(23) An information processing apparatus including:
   a model constructing section
      that uses, as teaching data, image data obtained through image-capturing performed by photoelectric conversion according to an incident light amount, a plurality of known detection periods for photon detection corresponding to the image data, and a feature of the image data, and
      that trains a learning model such that, when the image data and the feature of the image data that are included in the teaching data are input to the learning model, the corresponding plurality of known detection periods is output; and
   an inferring section
      that inputs, to the learning model having been trained by the model constructing section, image data that has been obtained through image-capturing performed by photoelectric conversion according to an incident light amount and whose plurality of optimum detection periods is unknown, and a feature of the image data, and
      that causes the trained learning model to output the plurality of optimum detection periods.
(24) An information processing apparatus including:
   a model constructing section
      that uses, as teaching data, a compression image whose reconstruction parameter for reconstructing an uncompressed image generated on the basis of a photon detected during a plurality of detection periods for photon detection is known, the reconstruction parameter, and a feature of the compression image, and
      that trains a learning model such that, when the compression image whose reconstruction parameter is known and the feature of the compression image are input to the learning model, the corresponding reconstruction parameter is output; and
   an inferring section
      that inputs, to the learning model having been trained by the model constructing section, a new compression image whose reconstruction parameter is unknown and a feature of the new compression image, and that causes the trained learning model to output the corresponding reconstruction parameter.
(25) A program that causes a computer to perform a process including:
   performing model construction including
      using, as teaching data, image data obtained through image-capturing performed by photoelectric conversion according to an incident light amount, and a plurality of known detection periods for photon detection corresponding to the image data, and
      training a learning model such that, when the image data included in the teaching data is input to the learning model, the corresponding plurality of known detection periods is output; and
   performing inference including
      inputting, to the learning model having been trained by the performing model construction, image data that has been obtained through image-capturing performed by photoelectric conversion according to an incident light amount and whose plurality of optimum detection periods is unknown, and
      causing the trained learning model to output the plurality of optimum detection periods.
(26) A program that causes a computer to perform a process including:
   performing model construction including
      using, as teaching data, a compression image whose reconstruction parameter for reconstructing an uncompressed image generated on the basis of a photon detected during a plurality of detection periods for photon detection is known, and the reconstruction parameter, and
      training a learning model such that, when the compression image whose reconstruction parameter is known is input to the learning model, the corresponding reconstruction parameter is output; and
   performing inference including
      inputting, to the learning model having been trained by the model constructing section, a new compression image whose reconstruction parameter is unknown, and
      causing the trained learning model to output the corresponding reconstruction parameter.
(27) A program that causes a computer to perform a process including:
   performing model construction including
      using, as teaching data, image data obtained through image-capturing performed by photoelectric conversion according to an incident light amount, a plurality of known detection periods for photon detection corresponding to the image data, and a feature of the image data, and
      training a learning model such that, when the image data and the feature of the image data that are included in the teaching data are input to the learning model, the corresponding plurality of known detection periods is output; and
   performing inference including
      inputting, to the learning model having been trained by the model constructing section, image data that has been obtained through image-capturing performed by photoelectric conversion according to an incident light amount and whose plurality of optimum detection periods is unknown, and a feature of the image data, and
      causing the trained learning model to output the plurality of optimum detection periods.
(28) A program that causes a computer to perform a process including:
   performing model construction including
      using, as teaching data, a compression image whose reconstruction parameter for reconstructing an uncompressed image generated on the basis of a photon detected during a plurality of detection periods for photon detection is known, the reconstruction parameter, and a feature of the compression image, and
      training a learning model such that, when the compression image whose reconstruction parameter is known and the feature of the compression image are input to the learning model, the corresponding reconstruction parameter is output; and
   performing inference including
      inputting, to the learning model having been trained by the model constructing section, a new compression image whose reconstruction parameter is unknown and a feature of the new compression image, and
      causing the trained learning model to output the corresponding reconstruction parameter.

Aspects of the present disclosure are not limited to the individual embodiments mentioned above, but incorporate also various modifications that can be conceived of by those skilled in the art, and advantages of the present disclosure also are not limited to the content mentioned above. That is, various additions, variations, and partial deletions are possible within the scope not departing from the conceptual idea and gist of the present disclosure derived from the content stipulated in claims and equivalents thereof.

### Reference Signs List

- 1, 1a, 1b: light detection system
- 2, 2a: signal processing apparatus
- 10, 10a, 10b: light detecting apparatus
- 11, 11a: pixel array section
- 12, 12a: signal processing section
- 13: control section
- 14: compression image generating section
- 15: reconstruction image generating section
- 16: image processing section
- 17: optimizing section
- 18: information storage section
- 18a: register
- 19: information setting section
- 20: pixel
- 20a: jot
- 21: light receiving section
- 22: counter
- 23: selection switch
- 30: photoelectric converting element
- 31: inverter
- 32: detection circuit
- 41: light absorption section
- 42: electric charge multiplying section
- 43: on-chip lens
- 50: machine learning section
- 51: model constructing section
- 52: information acquiring section
- 53: inferring section
- 61: scene detecting section
- 62: information determining section

## Claims

1. A light detecting apparatus comprising:
a plurality of two-dimensionally arrayed pixels; and
a signal processing section that generates an image on a basis of a pixel signal output from each of the plurality of pixels, wherein
each of the plurality of pixels has
a photoelectric converting element that detects an incident photon, and
a pixel circuit that generates the pixel signal on a basis of whether the photoelectric converting element has detected a photon in each one of a plurality of detection periods arranged sequentially in a time-axis direction, and
each of the plurality of detection periods has an encoded time width.

2. The light detecting apparatus according to claim 1, further comprising
an optimizing section that optimizes the time width of each of the plurality of detection periods.

3. The light detecting apparatus according to claim 2, wherein
the optimizing section optimizes the time width of each of the plurality of detection periods such that information loss of the pixel signal is minimized.

4. The light detecting apparatus according to claim 2, wherein
the optimizing section randomly sets the time width of each of the plurality of detection periods.

5. The light detecting apparatus according to claim 1, wherein
detection periods of the plurality of detection periods are arranged without gaps in the time-axis direction.

6. The light detecting apparatus according to claim 1, wherein
at least some pairs of detection periods included in the plurality of detection periods and adjacent to each other in the time-axis direction are provided such that the detection periods of each of the at least some pairs are spaced from each other in the time-axis direction.

7. The light detecting apparatus according to claim 1, wherein
the pixel circuit generates the pixel signal including a number of detection periods included in the plurality of detection periods and in which a photon has been incident.

8. The light detecting apparatus according to claim 1, wherein
the signal processing section includes
a compression image generating section that generates a compression image that has been compressed spatially and temporally on a basis of a plurality of the pixel signals output from the plurality of pixels, and
a reconstruction image generating section that generates, on a basis of the compression image, a reconstruction image with enhanced spatiotemporal resolution, compared to the compression image.

9. The light detecting apparatus according to claim 8, further comprising:
an information storage section that stores therein first information for setting the time width of each of the plurality of detection periods; and
an information setting section that sets second information necessary for generating the reconstruction image, wherein
the compression image generating section generates the compression image of one frame on a basis of a plurality of the pixel signals of a plurality of frames generated during the plurality of detection periods set on a basis of the first information, and
the reconstruction image generating section generates the reconstruction image from the compression images of a plurality of frames on a basis of the second information.

10. The light detecting apparatus according to claim 9, wherein
the information storage section stores therein the first information determined in advance, and
the information setting section sets the second information determined in advance.

11. The light detecting apparatus according to claim 9, further comprising:
a scene detecting section that detects a feature of the compression image; and
an information determining section that determines the first information and the second information on a basis of the feature of the compression image detected by the scene detecting section.

12. The light detecting apparatus according to claim 11, wherein
the information determining section determines the first information and the second information on a basis of a feature including at least one of a type of subject included in the compression image, or illuminance.

13. The light detecting apparatus according to claim 1, wherein
the photoelectric converting element has a SPAD (Single Photon Avalanche Diode).

14. The light detecting apparatus according to claim 1, wherein
the photoelectric converting element is provided for each jot of a QIS (Quanta Image Sensor).

15. A light detection system comprising:
a light detecting apparatus that generates a plurality of pixel signals by photoelectric conversion; and
a signal processing apparatus that generates an image on a basis of the plurality of pixel signals, wherein
the light detecting apparatus has a plurality of two-dimensionally arrayed pixels generating the plurality of pixel signals,
each of the plurality of pixels has
a photoelectric converting element that detects an incident photon, and
a pixel circuit that generates the pixel signal on a basis of whether the photoelectric converting element has detected a photon in each one of a plurality of detection periods arranged sequentially in a time-axis direction, and
each of the plurality of detection periods has an encoded time width.

16. The light detection system according to claim 15, wherein
the light detecting apparatus has a compression image generating section that generates, on a basis of the plurality of pixel signals, a compression image that has been compressed spatially and temporally, and
the signal processing apparatus has a reconstruction image generating section that generates, on a basis of the compression image, a reconstruction image with enhanced spatiotemporal resolution, compared to the compression image.

17. The light detection system according to claim 16, wherein
the signal processing apparatus has
an information storage section that stores therein first information for setting the time width of each of the plurality of detection periods,
an information setting section that sets second information necessary for generating the reconstruction image,
a scene detecting section that detects a feature of the compression image, and
an information determining section that determines the first information and the second information on a basis of the feature of the compression image detected by the scene detecting section.

18. The light detection system according to claim 16, wherein
the light detecting apparatus has
an information storage section that stores therein first information for setting the time width of each of the plurality of detection periods,
an information setting section that sets second information necessary for generating the reconstruction image,
a scene detecting section that detects a feature of the compression image, and
an information determining section that determines the first information and the second information on a basis of the feature of the compression image detected by the scene detecting section.

19. The light detection system according to claim 16, wherein
the signal processing apparatus has a signal processing section that performs predetermined signal processing on a basis of the reconstruction image.

20. The light detection system according to claim 15, wherein
the light detecting apparatus and the signal processing apparatus include mutually different semiconductor chips.
